Europäisches Patentamt

European Patent Office

Office européen des brevets

(19)

(11) **EP 1 213 568 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(51) Int Cl.⁷: **G06T 5/00**, G06T 5/50, G01J 3/51

(21) Anmeldenummer: **01105312.1**

(22) Anmeldetag: **07.03.2001**

(54) **Vorrichtung zur bildelementweisen Ausmessung eines flächigen Messobjekts**

Device for the measurement by pixel of a plane measuring object

Dispositif pour la mesure pixel par pixel d'un objet de mesure plat

(84) Benannte Vertragsstaaten:
**CH DE FR GB IT LI**

(30) Priorität: **08.12.2000 EP 00126493**

(43) Veröffentlichungstag der Anmeldung:
**12.06.2002 Patentblatt 2002/24**

(73) Patentinhaber: **Gretag-Macbeth AG**
**8105 Regensdorf (CH)**

(72) Erfinder: **Ott, Hans**
**8105 Regensdorf (CH)**

(74) Vertreter: **Schwabe - Sandmair - Marx**
**Stuntzstrasse 16**
**81677 München (DE)**

(56) Entgegenhaltungen:
DE-A- 4 210 343      US-A- 5 153 926
US-A- 5 724 259

• HUNT M A ET AL: "Imaging tristimulus colorimeter for the evaluation of color in printed textiles" PROC. SPIE - INT. SOC. OPT. ENG. (USA), PROCEEDINGS OF THE SPIE - THE INTERNATIONAL SOCIETY FOR OPTICAL ENGINEERING, 1999, SPIE-INT. SOC. OPT. ENG, USA, Bd. 3652, 1999, Seiten 118-128, XP002268904 ISSN: 0277-786X
• JANSSON PETER A ET AL: "Correcting color-measurement error caused by stray light in image scanners" 1998, PROC COLOR IMAGING CONF COLOR SCI SYST APPL; PROCEEDINGS OF THE COLOR IMAGING CONFERENCE: COLOR SCIENCE, SYSTEMS, AND APPLICATIONS 1998, PAGE(S) 69 - 73 , XP002268905 * Zusammenfassung * * Seite 69, Spalte 1 *

**Beschreibung**

Die Erfindung betrifft eine Vorrichtung zur bildelementweisen fotoelektrischen Ausmessung eines flächigen Messobjekts gemäss dem Oberbegriff des unabhängigen Anspruchs.

Zur punktweisen fotoelektrischen Abtastung von flächigen Messobjekten werden vor allem in der grafischen Industrie sogenannte Scanner eingesetzt. Diese besitzen einen relativ zum Messobjekt in ein oder zwei Dimensionen beweglichen Messkopf, der die spektrale Remission jeweils eines Bildpunkts des Messobjekts mittels einer 0°/45°-Messgeometrie erfasst und in entsprechende elektrische Signale umwandelt. Es sind auch schon mit einer Faseroptik ausgestattete Scanner bekannt, welche eine ganze Bildzeile auf einmal ausmessen können. Scanner, die ohne Relativbewegung zwischen Messkopf und Messobjekt eine grössere Messfläche punktweise mit für die Farbmessung ausreichender Genauigkeit und unter den für die Farbmessung allgemein üblichen, genormten geometrischen Verhältnissen ausmessen können, sind jedoch nicht bekannt.

Zur Abtastung von Bildern z.B. für Aufzeichnungszwecke werden anderseits Video-Kameras eingesetzt, die mit einem zweidimensionalen Bildsensor ausgestattet sind, auf den das komplette abzutastende Bild mittels des Kamera-Objektivs abgebildet wird, so dass keine Relativbewegung zwischen Kamera und Bild erforderlich ist. Der Bildsensor besteht in der Regel aus einer auf einen Chip integrierten zweidimensionalen Anordnung (Array) von Lichtwandlerelementen, üblicherweise auf CCD-Basis (charge coupled devices). Farbtaugliche Video-Kameras besitzen entweder mehrere Bildsensoren mit vorgeschalteten Farbfiltern oder einen Bildwandler mit integrierten Farbfiltern. Die Auflösung der Abtastung ist durch die Anzahl der für jeden Farbkanal verfügbaren Lichtwandlerelemente und durch den Abbildungsmassstab gegeben.

Die geometrischen Bedingungen für die Farbmessung sind durch internationale Normen definiert. Für die üblicherweise verwendete 0°/45°-Messgeometrie soll die Beleuchtung unter 45°±5° zur Normalen auf die Messfläche erfolgen und das remittierte Messlicht unter einem Beobachtungswinkel von 0°±5° zur Normalen auf die Messfläche aufgefangen werden. Der Strahlengang kann auch umgekehrt gewählt werden.

Eine wesentliche Schwierigkeit bei der farbmetrischen Ausmessung grösserflächiger Messobjekte mittels einer Video-Kamera besteht darin, dass einerseits die optischen Abbildungsmittel mit vernünftigem Aufwand nicht ganz frei von geometrischen Verzeichnungen realisierbar sind und mehr oder weniger ausgeprägte Reflexionsbilder erzeugen und dass anderseits aufgrund zwangsläufig fehlender Messblenden oder sonstiger Abschirmungsorgane Streulichteffekte zwischen den einzelnen Bildpunkten des Messobjekts auftreten und mitgemessen werden. Ferner sind insbesondere bei grösseren Messobjekten die Einfallswinkel des Messlichts auf die zur spektralen Aufspaltung eingesetzten Filter nicht in allen Bildpunkten gleich, wodurch auch spektrale Fehler auftreten.

Die US-5,724,259 A beschreibt ein Verfahren zur Korrektur von Streulichteffekten, die von einem gedruckten Bild reflektiert werden, wobei eine Kameraanordnung eine Aufzeichnungsvorrichtung und ein Beleuchtungssystem aufweist, die beide mit einem Computer über einen Signalbus verbunden sind, wobei die Kameraanordnung mit Hilfe einer Kamerapositioniereinheit senkrecht X zu einer Bewegungsrichtung Y der Bahn bewegt wird, um eine selektive Bildaufnahme der seitlichen Abschnitte der gedruckten Bilder auf der Bahn aufzuzeichnen. Die Kameraanordnung weist drei CCD-Anordnungen für die Farben rot, grün und blau auf, wobei das remittierte Licht durch ein dichromatisches Prisma zu den CCD-Anordnungen geführt wird. Die jeweiligen roten, grünen und blauen Bilddatensignale werden zu einer Bildelektronik geleitet, die mit dem Signalbus mit einem Computer in Verbindung steht. Der Computer manipuliert die Bilddaten, um Streulichteffekte zu korrigieren, indem er eine Point-Spread-Funktion (PSF) verwendet, wobei verschiedene Berechnungen durchgeführt werden, wie zum Beispiel Faltung, Fouriertransformation usw., wobei das Verfahren dieser Druckschrift bestimmte vereinfachte Annahmen macht, um die Berechnungen zu minimieren. Durch die Bewegung in X-Richtung können einzelne Bildelemente fotoelektrisch ausgemessen werden, wobei durch die Bewegung der Bahn in Y-Richtung ein flächiges Messobjekt ausgemessen werden kann.

Die Druckschrift "Imaging tristimulus colorimeter for the evaluation of color in printed textiles" von Hunt M. A. et al., PROC.SPIE - INT. SOC. OPT. ENG. (USA) PROCEEDINGS OF THE SPIE - THE INTERNATIONAL SOCIETY FOR OPTICAL ENGINEERING, 1999, SPIE-INT. SOC. OPT. ENG, USA, Bd. 3652, 1999 Seiten 118-128, XP002268904 ISSN: 0277-786X, beschreibt ein System, in dem eine CCD-Kamera eingesetzt wird, um ein flächiges Messobjekt fotometrisch auszumessen, wobei als Filtermittel zur Wellenlängenselektion des Messlichtes ein Farbrad eingesetzt wird und die Rohmessdaten durch den Computer korrigiert werden.

Die Druckschrift "Correcting color-measurement error caused by stray light in image scanners" von Jansson Peter et al., 1998, PROC COLOR IMAGING CONF COLOR SCI SYST APPL; PROCEEDINGS OF THE COLOR IMAGING CONFERENCE: COLOR SCIENCE, SYSTEMS, AND APPLICATIONS 1998 Seiten 69-73, WP002268905, beschreibt ein optisches System, das verschiedene Berechnungen wie zum Beispiel Faltung und Fouriertransformation verwendet, um Fehler wie zum Beispiel Streulichtfehler in einem Bild zu korrigieren.

Die US-5,153,926 A beschreibt eine Vorrichtung und ein Verfahren zum Abbilden eines Objektes, wobei Streulichteffekte eliminiert werden. Dies wird erreicht, indem das einfallende Licht an vorbestimmten Bereichselementen mit einem vorbestimmten Gewichtungsfaktor gewichtet wird.

Die DE-A-42 10 343 betrifft eine Vorrichtung zur Messung der Verteilung der Lichtintensität einer flächigen Probe auf einem transparenten Träger, wobei eine rechnerische Korrektur des Streulichteinflusses ausgeführt wird, wobei bei der Berechnung der lageabhängig Einfluss des Bildbereichs auf das betrachtete Pixel berücksichtigt wird, wobei für jeden Bildpunkt dabei eine Summe von Lichtanteilen abgezogen werden kann, die die mit Systemkonstanten gewichteten Helligkeiten der Nachbarbildbereiche darstellen.

Durch die vorliegende Erfindung soll nun eine Messvorrichtung der gattungsgemässen Art dahingehend verbessert werden, dass sie für Farbmessungen tauglich ist.

Die Lösung dieser der Erfindung zugrundeliegenden Aufgabe ergibt sich aus den im kennzeichnenden Teil des unabhängigen Anspruchs beschriebenen Merkmalen. Besonders vorteilhafte Ausgestaltungen und Weiterbildungen sind Gegenstand der abhängigen Ansprüche.

Gemäss dem grundlegendsten Gedanken der Erfindung sind Mittel vorgesehen, um wenigstens die am meisten störenden Streulichteinflüsse zu kompensieren bzw. zu korrigieren. Ganz besonders zweckmässig ist es aber, wenn die die Korrektuimassnahmen realisierenden Datenverarbeitungsmittel mehrere oder alle der in den abhängigen Ansprüchen angeführten Korrekturmassnahmen durchführen, im Idealfall also eine Geometrie-Korrektur, eine Reflex-Korrektur, eine Streulicht-Korrektur, eine Weiss-Normalisierung, eine Rand-Weiss-Normalisierung und eine Spektral-. Korrektur.

Im folgenden wird die Erfindung anhand der Zeichnung näher erläutert. Darin zeigen:

Fig. 1         eine schematische Darstellung eines ersten Ausführungsbeispiels der erfindungsgemässen Messvorrichtung,

Fig. 2         eine schematische Skizze einer Spektral-Video-Kamera eines zweiten Ausführungsbeispiels der erfindungsgemässen Messvorrichtung,

Fig. 3         eine Skizze zur Erläuterung der geometrischen Entzerrung der Daten des Messobjekts,

Fig. 3a        einen vergrösserten Ausschnitt aus Fig. 3,

Figs. 4, 5     zwei Skizzen zur Erläuterung der Reflex-Korrektur,

Fig. 6         eine Skizze zur Erläuterung der Streulicht-Korrektur,

Fig. 6a        einen vergrösserten Ausschnitt aus Fig. 6,

Figs. 7a,b     zwei Testbilder mit je einem speziellen Kalibrierungselement,

Fig. 8         ein Testbild mit einem speziellen Streulicht-Element,

Fig. 8a        das Streulicht-Element der Fig. 8 in vergrösserter Darstellung,

Fig. 9         ein Diagramm zur Erläuterung der Berechnung von Streulicht-Koeffizienten und

Fig. 10        eine schematische Zusammenstellung aller Korrekturmassnahmen.

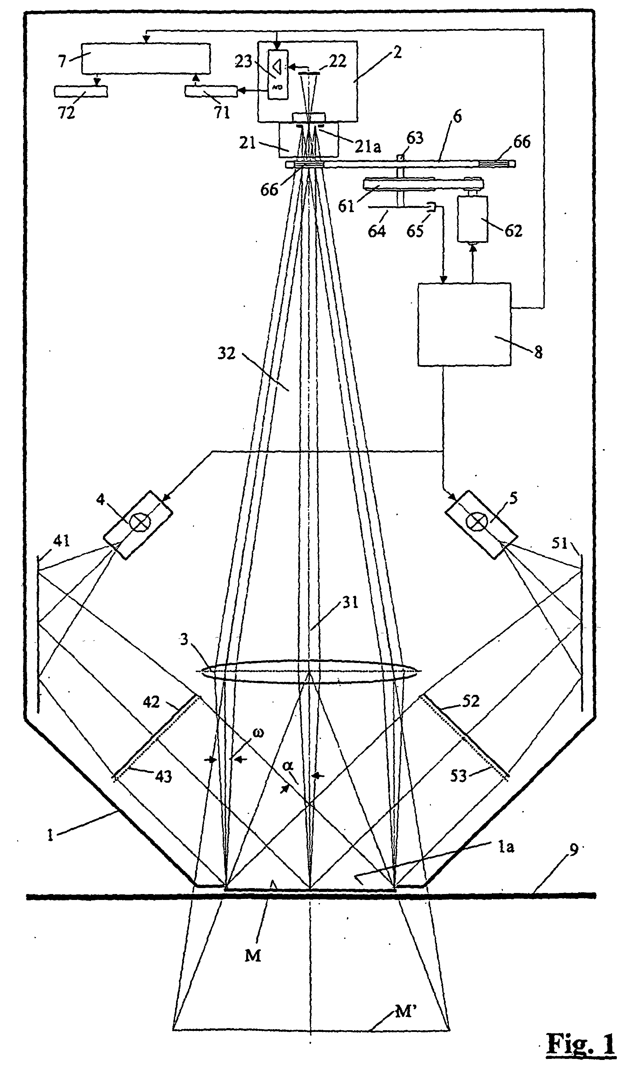

Das in Figur 1 dargestellte erste Ausführungsbeispiel der erfindungsgemässen Messvorrichtung umfasst ein lichtdichtes Gehäuse 1 mit einem Messfenster 1a, eine Videokamera 2, eine vorzugsweise als Fresnel-Linse ausgebildete Telelinse 3, zwei Blitzlichtquellen 4 und 5, zwei Umlenkspiegel 41 und 51, zwei vorzugsweise als Fresnel-Linsen ausgebildete Beleuchtungslinsen 42 und 52, zwei an den Beleuchtungslinsen angeordnete Verlaufsfilter 43 und 53, ein Filterrad 6, einen Riemen-Antrieb 61, 62, einen mit der Achse 63 des Filterrads 6 verbundenen Winkelkodierer 64 mit zugehörigem Sensor 65, eine Datenverarbeitungsstufe 7 und eine zentrale Ablaufsteuerung 8. Die Datenverarbeitungsstufe 7 und die Ablaufsteuerung 8 sind vorzugsweise durch einen digitalen Rechner realisiert und können selbstverständlich auch ausserhalb des Gehäuses 1 angeordnet sein.

Die Video-Kamera 2 ist an sich konventionell aufgebaut und umfasst als für die vorliegende Erfindung relevante Teile ein Standard-Abbildungsobjektiv 21, einen Bildsensor 22 in Form einer zweidimensionalen Anordnung von Lichtwandlerelementen, insbesondere sog. CCD-Elementen (charge coupled devices), sowie die übliche Signalaufbereitungselektronik 23, welche die vom Bildsensor 22 erzeugten elektrischen Signale ausliest, verstärkt und digitalisiert und sie am Ausgang der Video-Kamera 2 als digitale Rohmessdaten 71 zur Verfügung stellt. Der Bildsensor 22 kann beispielsweise etwa 300000 einzelne Lichtwandlerelemente mit einer typischen se von etwa 0,01 mm aufweisen.

Das Filterrad 6 ist an seinem Umfangsrand mit 16 schmalbandigen Farbfiltern 66 sowie einem infrarot durchlässigen Fenster und einem undurchlässigen Bereich versehen. Jedes als Bandpassfilter ausgebildete Farbfilter 66 besitzt eine Bandbreite von etwa 20 nm, und insgesamt decken die Farbfilter 66 den sichtbaren Spektralbereich von im wesentlichen etwa 400-700 nm ab. Das Filterrad 6 ist so vor der Video-Kamera 2 angeordnet, dass seine Farbfilter 66 durch entsprechende Drehung des Filterrads selektiv vor das Abbildungsobjektiv 21 positioniert werden können. Die Positionierung der Farbfilter 66 wird in an sich bekannter Weise durch die Ablaufsteuerung 8 gesteuert.

Das auszumessende Messobjekt M befindet sich auf einer Unterlage 9 vor dem Messfenster 1a des Gehäuses 1. Die Telelinse 3 liegt zwischen dem Messfenster 1a und dem Abbildungsobjektiv 21 der Video-Kamera 2. Ihr Brennpunkt liegt ca. in der Eintrittsblende 21a des Kamera-Objektivs 21. Das Kamera-Objektiv 21 bildet zusammen mit der Telelinse 3 eine telezentrische Abbildungsoptik, welche jeden Punkt des Messobjekts M unter im wesentlichen demselben Beobachtungswinkel von im wesentlichen 0° "sieht" und auf die Lichtwandlerelementanordnung bzw. den Bildsensor 22 der Video-Kamera 2 abbildet. Der für alle Bildpunkte des Messobjekts M im wesentlichen gleiche Öffnungswinkel ($\omega$) ist durch die Abmessungen der Eintrittsblende 21a des Kamera-Objektivs 21 bestimmt und beträgt vorzugsweise maximal etwa 5°. Durch die Telelinse 3 sieht das Kamera-Objektiv 21 ein virtuelles Messobjekt M' und ist in an sich bekannter Weise auf dieses dimensioniert und fokusiert.

Die Grösse der abgetasteten Bildpunkte des Messobjekts M ist durch die Auflösung des Bildsensors 22 der Video-Kamera 2 sowie durch den Abbildungsmassstab der telezentrischen Abbildungsoptik 3-21 gegeben.

Die beiden Blitzlichtquellen 4 und 5 sind jeweils im Brennpunkt der Beleuchtungslinsen 42 und 52 angeordnet, so dass das Messobjekt M mit zwei parallelen Strahlenbündeln 44 und 54 beleuchtet wird. Die Anordnung ist so getroffen, dass die Einfallswinkel $\alpha$ der beiden parallelen Strahlenbündel im wesentlichen 45°±5° zur optischen Achse der Abbildungsoptik bzw. zur Normalen 31 auf das Messobjekt M betragen. Damit sind die in internationalen Normen für die Farbmessung definierten geometrischen Bedingungen erfüllt.

Um eine homogene Beleuchtungsstärke über die gesamte beleuchtete Fläche des Messobjekts M zu erreichen, sind die beiden Verlaufsfilter 43 und 53 vorgesehen. Diese weisen eine von aussen nach innen abnehmende Lichtdurchlässigkeit aus, welche in an sich bekannter Weise den unvermeidbaren Randabfall der Lichtintensität der Strahlenbündel kompensieren. Die Verlaufsfilter können wie in der grafischen Industrie üblich aus einem gerasterten Film bestehen, wobei sich die Flächenbedeckungen (Grössen) der einzelnen Rasterpunkte aus der erforderlichen Lichtabschwächung bestimmt. Die beiden Verlaufsfilter 43 und 53 sind vorzugsweise direkt auf die Fresnel-Linsen 42 und 52 aufgebracht, können aber selbstverständlich auch anderen Orts im Beleuchtungsstrahlengang angeordnet sein.

Im in Figur 1 gezeigten Ausführungsbeispiel ist die Video-Kamera 2 als Schwarz-/-Weiss-Kamera ausgebildet, d.h. ihr Bildsensor 22 kann selbst keine Farbseparation durchführen. Die spektrale Aufteilung des vom Messobjekt M remittierten Messlichts erfolgt hier sequentiell durch die vor dem Kamera-Objektiv 21 in den Abbildungsstrahlengang 32 einschwenkbaren Bandpassfilter 66.

Für die Ausmessung des Messobjekts werden die einzelnen Farb-Bandpassfilter 66 des Filterrads 6 sowie ggf. das infrarot-durchlässige Fenster und der undurchlässige Bereich des Filterrads nacheinander in den Strahlengang eingeschwenkt und dabei gleichzeitig jeweils die Blitzlichtquellen 4 und 5 aktiviert. Der Bildsensor 22 empfängt jeweils das vom Messobjekt remittierte Messlicht und wandelt dieses in-entsprechende elektrische Signale um. Diese werden von der Signalaufbereitungselektronik ausgelesen, verstärkt und digitalisiert. Nach einem vollständigen Messzyklus liegen in Form der digitalen Rohmessdaten 71 sechzehn schmalbandige Farbauszüge des Messobjekts vor, die in ihrer Gesamtheit die (diskreten) Remissionsspektren der einzelnen abgetasteten Bildpunkte des Messobjekts darstellen. Zusätzlich liegen ggf. für jeden Bildpunkt noch ein Dunkelmesswert und Infrarotmesswerte vor, welche für Referenzzwecke verwendet werden können.

Unter Verwendung eines Bildsensors mit beispielsweise (rund) 300000 Lichtwandlerelementen umfassen die Rohmessdaten 300000 * 16 bzw. 300000 * 18 einzelne Messwerte. Die Rohmessdaten 71 werden der Datenverarbeitungsstufe 7 zugeführt und in dieser nach verschiedenen Gesichtspunkten korrigiert. Das Ergebnis dieser Korrektur-Operationen sind korrigierte Bilddaten 72, welche dann für die weitere Verwendung bzw. Auswertung zur Verfügung stehen.

Die Spektralcharakteristik von Interferenzfiltern ist abhängig vom Eintrittswinkel der Lichtstrahlen. Dieser Winkel ist nicht konstant, sondern abhängig von der Position des gemessenen Bildpunkts auf dem Messobjekt. Er lässt sich jedoch aus der Position des jeweiligen Bildpunkts berechnen, und daraus kann wiederum die tatsächlich wirksame Filtercharakteristik für die betreffende Bildpunktposition bestimmt werden. Durch Interpolation können für die nominellen Wellenlängen, z.B. 400, 420, 440 ... 680, 700 nm, die Spektralwerte bestimmt werden. Auf diese Weise kann die Winkelabhängigkeit der Filtercharakteristiken rechnerisch korrigiert werden. Näheres folgt noch weiter unten.

Im vorstehenden Ausführungsbeispiel wird das Messobjekt M (in diskreten Schritten) spektral ausgemessen. Dies ergibt universelle Messdaten, welche für beliebige farbmetrische Auswertungen herangezogen werden können. Anstelle des vollständigen Spektrums können aber z.B. auch nur einige Farbauszüge gemessen werden, wofür dann entsprechend weniger Farbfilter erforderlich wären. Beispielsweise könnten etwa die genormten R,G,B-Filter oder X, Y,Z-Filter gemäss CIE verwendet werden. Das Ergebnis dieser Messungen wären dann R,G,B-Werte bzw. X,Y,Z-Werte für jeden einzelnen Bildpunkt des Messobjekts M.

Anstelle der sequentiellen Anordnung mit dem Filterrad 6 könnte in einem alternativen Ausführungsbeispiel der erfindungsgemässen Messvorrichtung auch eine simultane Anordnung vorgesehen sein. Eine solche kann beispielsweise unter Verwendung einer farbtauglichen Video-Kamera bzw. eines farbtauglichen Bildsensors realisiert werden. Farbtaugliche Bildsensoren haben typischerweise integrierte Farbfilter, die unmittelbar auf jedem Lichtwandlerelement angeordnet sind. Bei gleicher Anzahl von Lichtwandlerelementen erniedrigt sich dabei aber die erreichbare Auflösung und die Lichtempfindlichkeit um einen der Anzahl unterschiedlicher Farbfilter entsprechenden Faktor (üblicherweise 3).

Für den Fall von R,G,B-Filtern lässt sich eine gegenüber klassischen Bildsensoren höhere Bildauflösung dadurch erreichen, dass für die einzelnen Farben unterschiedliche Anzahlen von Lichtwandlerelementen vorgesehen sind. Beispielsweise können doppelt soviele Lichtwandlerelemente mit einem Grün-Filter als Lichtwandlerelemente mit einem Rotfilter bzw. einem Blaufilter vorgesehen sein. Dies entspricht dem grösseren Auflösungsvermögen des menschlichen Auges für grün gegenüber rot und blau. Die Umrechnung der mit einer solchen Anordnung gemessenen R,G,B-Messwerte in Farbmesszahlen gemäss CIE ist allerdings nur angenähert möglich.

Eine analoge Anordnung ist möglich, wenn anstelle der R,G,B-Filter solche mit den durch die CIE genormten X,Y,Z-Spektralcharakteristiken eingesetzt werden. Es ist jedoch schwierig, alle diese Filtercharakteristiken auf einem einzigen Chip genügend genau herzustellen. Zudem gelten die unter Verwendung solcher Filter ermittelten Farbmasszahlen nur für die bei der Messung verwendete physikalische Lichtart. Die Berechnung der Farbmasszahlen für beliebige Lichtarten, wie dies bei einer spektralen Messung erfolgen kann, ist nicht möglich. Auch ist z.B. eine Farbrezeptur basierend nur auf X,Y,Z-Messwerten gemäss CIE nicht möglich. Eine verbesserte Auflösung kann analog der vorstehend beschriebenen R,G,B-Anordnung erreicht werden, indem doppelt soviele Lichtwandlerelemente mit einem Y-Filter ausgestattet werden als mit einem X- bzw. einem Z-Filter

Theoretisch wäre es möglich, 16 unterschiedliche schmalbandige Farbfilter in den Bildsensor zu integrieren, so dass damit direkt eine spektrale Messung möglich würde. Allerdings ist die praktische Herstellung ausreichend schmalbandiger und so vieler unterschiedlicher (Interferenz-) Farbfilter direkt auf den Lichtwandlerelementen eines einzigen Chips technologisch sehr schwierig. Ausserdem würde die Bildauflösung und die Lichtempfindlichkeit auf 1/16 gegenüber einem herkömmlichen (farbneutralen) Bildsensor sinken.

Eine andere Möglichkeit zur simultanen Messung des gesamten Spektrums besteht gemäss einem weiteren Aspekt der Erfindung in der Verwendung mehrerer Video-Kameras, von denen jede einen schmalen Spektralbereich von etwa 20 nm Bandbreite misst und die z.B. in einer 4*4 Matrix um die optische Achse der Telelinse gruppiert sind. Eine solche Anordnung ermöglicht die volle Auflösung der eingesetzten Bildsensoren und hat auch die volle Lichtempfindlichkeit. Nachteilig ist dabei allerdings, dass keine exakte parallele telezentrische Abbildung für alle Kameras möglich ist. Auch haben die Kameras infolge der exzentrisch versetzten Anordnung unterschiedliche geometrische Verzeichnungen. Diese können jedoch rechnerisch durch eine entsprechende Transformation der Bildkoordinaten korrigiert werden.

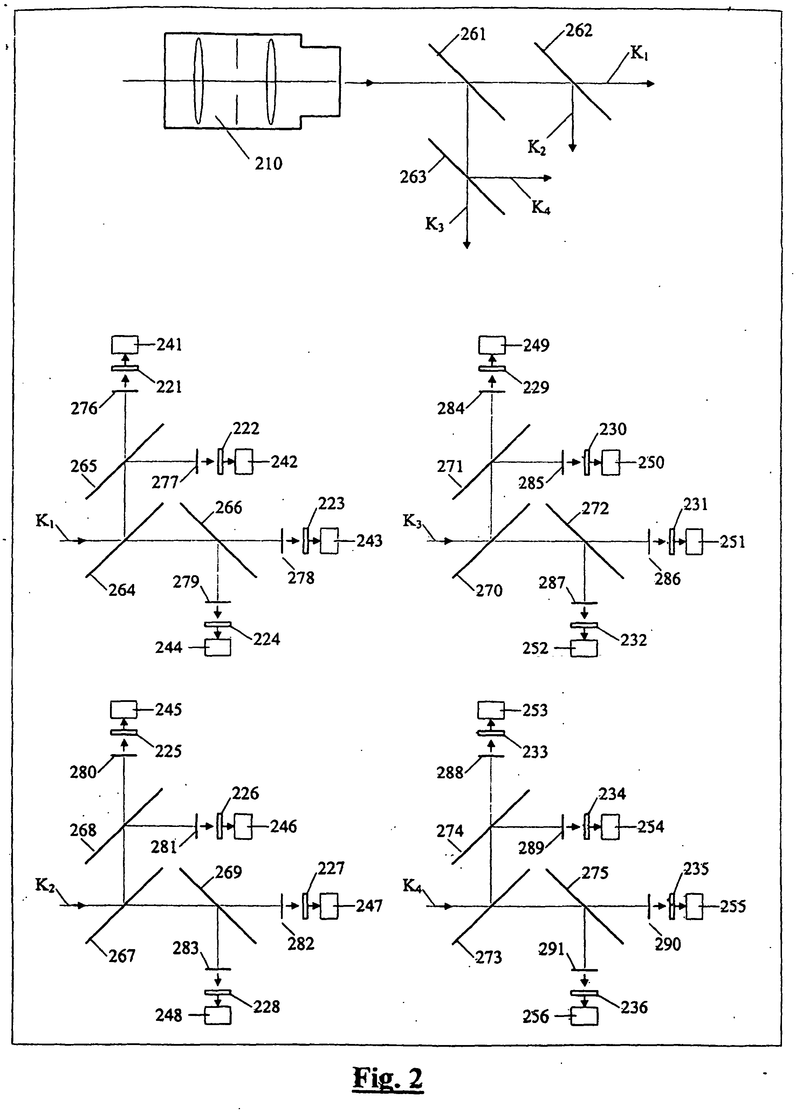

Gemäss einem weiteren Ausführungsbeispiel der erfindungsgemässen Messvorrichtung kann eine simultane Spektralmessung durch den Einsatz einer speziell ausgebildeten Spektral-Video-Kamera realisiert werden. Ein Prinzip-Schema einer solchen Spektral-Video-Kamera ist in Figur 2 dargestellt.

Das wesentlichste Merkmal der als Ganze mit 200 bezeichneten Kamera besteht darin, dass sie nicht nur einen einzigen sondern 16 gleichartige Bildsensoren 221-236 und entsprechende zugeordnete Signalaufbereitungselektroniken 241-256 sowie eine im wesentlichen durch Interferenzspiegel realisierte farbselektive Strahlenteileranordnung 261-291 aufweist, welche das vom Abbildungsobjektiv 210 der Kamera 200 kommende Messlicht in 16 schmalbandige Spektralbereiche aufteilt und jeden Spektralbereich auf je einen der Bildsensoren 221-236 lenkt. Die Signalaufbereitungselektroniken 241-256 können selbstverständlich auch zu einer einzigen Einheit zusammengefasst sein.

Da es in der Praxis schwierig ist, die Wellenlängenbereichsübergänge von Interferenzspiegeln ausreichend schmalbandig auszuführen, wird das Messlicht gemäss einem weiteren Aspekt der Erfindung zuerst mittels dreier halbdurchlässiger Spiegel 261-263 in an sich bekannter Weise farbneutral in vier Kanäle $K_1$-$K_4$ zu je 25% Intensität aufgesplittet. In jedem dieser vier Kanäle $K_1$-$K_4$ sind drei farbselektive Strahlenteilerspiegel 264-266, 267-269, 270-272 und 273-275 angeordnet, welche jeden Kanal in vier Spektralbereiche aufteilen. Zur sauberen Bandbreitenbegrenzung und exakten Anpassung der Spektralcharakteristik befinden sich nach 8 dieser farbselektiven Strahlenteilerspiegel je zwei Bandpassfilter 276-291 mit einer Bandbreite von etwa 20 nm. Insgesamt decken die Spektralbereiche bzw. Bandpassfilter den Wellenlängenbereich von 400-700 nm ab. Unmittelbar nach den Bandpassfiltern sind die Bildsensoren 221-236 angeordnet.

Die nachstehende Tabelle 1 zeigt die Übergangswellenlängen der beispielsweise verwendeten farbselektiven Strahlenteilerspiegel 264-266, 267-269, 270-272 und 273-275 und die Mittenwellenlängen der jeweils nachgeschalteten Bandpassfilter 276-291.

Tabelle 1

| Strahlenteilerspiegel | Übergangswellenlänge [nm] | Bandpassfilter | Mittenwellenlänge [nm] |
|---|---|---|---|
| 264 | 520 | | |
| 265 | 440 | 276 | 400 |
| | | 277 | 480 |
| 266 | 600 | 278 | 640 |
| | | 279 | 560 |
| 267 | 540 | | |
| 268 | 460 | 280 | 420 |
| | | 281 | 500 |
| 269 | 620 | 282 | 620 |
| | | 283 | 580 |
| 270 | 560 | | |
| 271 | 480 | 284 | 440 |
| | | 285 | 520 |
| 272 | 640 | 286 | 680 |
| | | 287 | 600 |
| 273 | 580 | | |
| 274 | 500 | 288 | 460 |
| | | 289 | 540 |
| 275 | 660 | 290 | 700 |
| | | 291 | 620 |

Die farbneutralen halbdurchlässigen Spiegel sind vorzugsweise in an sich bekannter Weise durch Grenzflächen von im wesentlichen etwa halbwürfelförmigen Glasprismen realisiert. In analoger Weise sind die durch Interferenzfilter realisierten farbselektiven Strahlenteilerspiegel auf Grenzflächen von Glasprismen aufgebracht. Die Bandpassfilter sind ebenfalls direkt auf den Glasprismen aufgebracht, und die Bildsensoren sind unmittelbar an den Glasprismen montiert. Die einzelnen Glasprismen sind mit optischem Kontakt aneinandergefügt, so dass durch Medium-Übergänge bedingte Verluste vermieden werden. Die Glasprismen sind räumlich gegenseitig so angeordnet und orientiert, dass eine kompakte Konfiguration entsteht und alle Bildsensoren Platz haben.

Der Strahlenteiler kann auch direkt anschliessend an die Telelinse angeordnet werden. Es braucht dann zwar für jeden Kanal ein Objektiv, dafür sind aber bei einer solchen Anordnung die kleineren Oeffnungswinkel vorteilhaft.

Mit idealen Strahlenteilerspiegeln in einer 1-2-4-8-Anordnung ist es im Prinzip möglich, das Spektrum in 16 Spektralbereiche zu je 20 nm Bandbreite verlustfrei aufzuteilen, so dass jeder Bildsensor 100% Licht (seines Wellenlängenbereichs) bekommt. Die Bandcharakteristiken werden dabei allein durch die Spiegelinterferenzschichten bestimmt, es sind also keine zusätzlichen Bandpassfilter erforderlich.

Die nachstehende Tabelle 2 zeigt die Übergangswellenlängen einer sokhen 1-2-4-8-Anordnung von (idealen) Strahlenteilerspiegeln sowie die Mittenwellenlängen der resultierenden Spektralbereiche.

Tabelle 2

| Übergangswellenlängen [nm] Interferenz-Strahlenteiler | | | | Mittenwellenlängen [nm] Spektralbereiche |
|---|---|---|---|---|
| 550 | 470 | 430 | 410 | 400 |
| | | | | 420 |
| | | | 450 | 440 |
| | | | | 460 |
| | | 510 | 490 | 480 |
| | | | | 500 |
| | | | 530 | 520 |
| | | | | 540 |
| | 630 | 590 | 570 | 560 |
| | | | | 580 |
| | | | 610 | 600 |
| | | | | 520 |
| | | 670 | 650 | 640 |
| | | | | 660 |
| | | | 690 | 680 |
| | | | | 700 |

Eine Simultan-Video-Kamera mit 16 Spektralbereichen ist recht aufwendig in der Herstellung. Ein Kompromiss zwischen einer solchen Spektral-Kamera und einer X,Y,Z-Dreibereichskamera ist eine Kamera mit z.B. 7 Spektralbereichen, die mit entsprechenden Filtern aufgebaut werden kann. Fünf Filter haben dabei eine Bandbreite von je 30 nm und Mittenwellenlängen von 470, 500, 530, 560 und 590 nm. Ein Filter überdeckt den Wellenlängenbereich von 400-470 nm und bildet im Bereich von 400-450 nm die Z-Charakteristik gemäss CIE nach. Ein siebtes Filter überdeckt den Wellenlängenbereich von 590-700 nm und bildet im Bereich von 620-700 nm die X-Charakteristik gemäss CIE nach. Mit den genannten Filtern lassen sich die X,Y,Z-Charakteristiken gemäss CIE rechnerisch gut nachbilden, was für eine absolut genaue Farbmessung wichtig ist. Es kann noch ein weiteres Filter vorgesehen sein, welches im Infrarot-Bereich liegt und daher nicht zur Bestimmung von Farbmasszahlen verwendet werden kann. Dieses Infrarot-Filter ermöglicht aber in an sich bekannter Weise weitergehende Aufschlüsse über das Messobjekt, z.B. darüber, ob ein Bildpunkt schwarz erscheint durch den Überdruck der drei Buntfarben Cyan, Magenta und Gelb oder ob er mit schwarzer Druckfarbe bedruckt ist.

Die (beispielsweise rund 300000 * 16 bzw. 300000 * 18 einzelne Messwerte umfassenden) Rohmessdaten 71 werden, wie schon erwähnt, der Datenverarbeitungsstufe 7 zugeführt und in dieser nach verschiedenen Gesichtspunkten korrigiert. Das Ergebnis dieser diversen Korrektur-Operationen sind korrigierte Bilddaten 72, welche dann für die weitere Verwendung zur Verfügung stehen.

Vor den nachstehend beschriebenen eigentlichen Korrekturoperationen in der Datenverarbeitungsstufe 7 werden die Rohmessdaten 71 selbstverständlich noch bezüglich des Bildsensors 22 vorkorrigiert, indem die Dunkelmesswerte abgezogen und die einzelnen CCD-Elemente des Bildsensors 22 linearisiert werden. Diese Vorkorrektur ist bei Messungen mit Bildsensoren, speziell CCD-Bildsensoren allgemein bekannt und üblich und wird daher im folgenden nicht näher erläutert.

Geometriekorrektur:

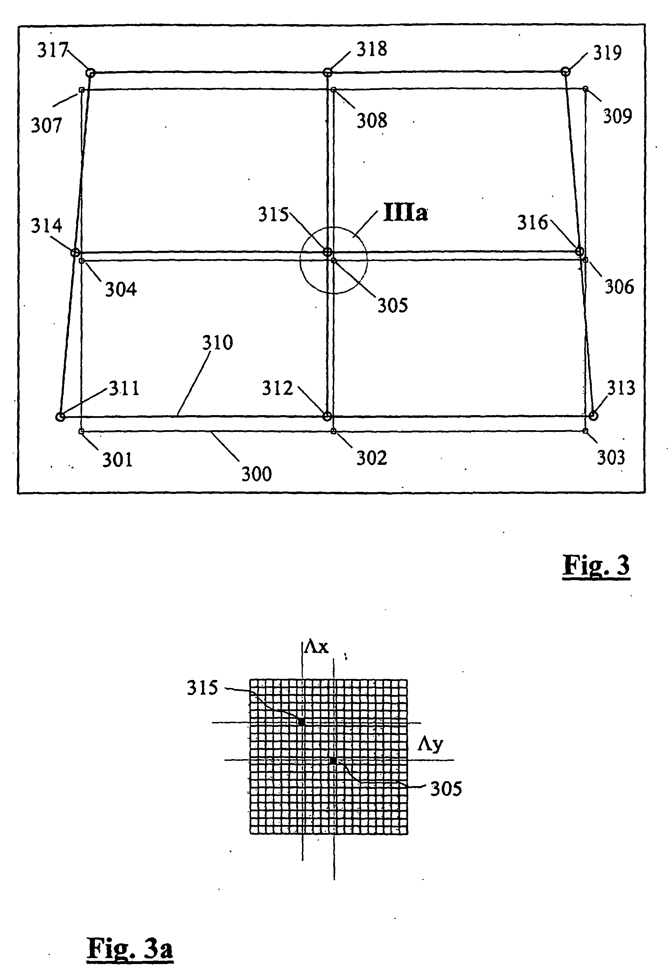

Das optische Abbildungssystem der Messvorrichtung ist in der Regel nicht absolut perfekt, sondern verursacht eine (idealerweise möglichst geringfügige) geometrische Verzerrung, die vor allen weiteren Operationen korrigiert werden muss. Fig. 3 veranschaulicht die diesbezügliche Vorgehensweise.

Mit der Messvorrichtung wird ein Testbild ausgemessen, welches ein Testmuster in Form eines rechteckigen Rahmens und ein mittig im Rahmen angeordneten Kreuzes aufweist. Die Eckpunkte des Rahmens und die Schnittpunkte des Rahmens mit dem Kreuz definieren neun Referenzpunkte, welche zur Bestimmung der geometrischen Verzerrungen herangezogen werden. In der Fig.3 ist die theoretische Position und Form des Testmusters mit 300 bezeichnet, die entsprechenden Referenzpunkte sind mit 301 - 309 bezeichnet. Das tatsächlich gemessene (und durch das Abbildungssystem verzerrte) Testmuster ist mit dem Bezugszeichen 310 versehen, die entsprechenden Referenzpunkte sind mit 311 - 319 bezeichnet. Wie man aus (der stark übertrieben Darstellung) der Figur 3 erkennt, verursachte das Abbildungssystem im Beispiel eine Positionsverschiebung in zwei Dimensionen sowie eine Trapez-Verzerrung.

Nun werden für jeden der neun Referenzpunkte 311 - 319 die Positionsabweichungen $\Delta x$ und $\Delta y$ gegenüber den Sollpositionen (Punkte 301 - 309) bestimmt, wie dies anhand der Fig. 3a deutlich wird. Im nächsten Schritt werden anhand der Positionsabweichungen der neun Referenzpunkte durch Interpolation die Positionsabweichungen für jeden einzelnen Bildpunkt des gesamten Testbilds berechnet. Erfahrungsgemäss sind die Positionsabweichungen nahe beieinander liegender Bildpunkte nicht sehr unterschiedlich. Gemäss einem Aspekt der Erfindung werden daher jeweils mehrere, z.B. 8*8 beieinanderliegende Bildpunkte zu Geometriekorrekturbereichen zusammengefasst und nur die Positionsabweichungen für diese Geometriekorrekturbereiche berechnet. Bei angenommenen insgesamt 480*640 Bildpunkten ergibt dies beispielsweise 60*80 = 4800 Bereiche. Die (berechneten) Positionsabweichungen $\Delta x$ und $\Delta y$ dieser 4800 Geometriekorrekturbereiche werden in einer Geometriekorrekturtabelle abgespeichert. Ein Beispiel einer solchen Geometriekorrekturtabelle ist in der Tabelle 3 ausschnittsweise dargestellt ($\Delta x$- und $\Delta y$-Werte willkürlich).

Selbstverständlich kann zur Ermittlung der geometrischen Verzerrung des Abbildungssystems auch ein anderes Testmuster verwendet werden.

Für die geometrische Korrektur des Messobjekts wird für jeden Bildpunkt (anhand seiner Bildpunktkoordinaten) der Geometriekorrekturbereich festgestellt, zu welchem er gehört, und dann aus der Geometriekorrekturtabelle die Positionsabweichung $\Delta x$ und $\Delta y$ für den betreffenden Geometriekorrekturbereich entnommen. Die eigentliche Korrektur erfolgt dann in an sich bekannter Weise dadurch, dass der Messwert des betreffenden Bildpunkts durch den Messwert des um die Positionsabweichung versetzten Bildpunkts (bzw. bei nicht ganzzahligen Pixel-Abständen eines aus den Umgebungspunkten interpolierten Wertes) ersetzt wird.

Tabelle 3

| Bereich Nr.: | Bildpunkte: | $\Delta x$ (in Pixel): | $\Delta y$ (in Pixel): |
|---|---|---|---|
| 1 | x1...x8, y1...y8 | 3,25 | - 5.75 |
| 2 | x9...x16, y1...y8 | 3.2 | - 5.7 |
| u.s.w. | u.s.w. | u.s.w. | u.s.w. |

Nach der geometrischen Entzerrung des Messobjekts erfolgen die nachstehend erläuterten weiteren Korrekturmassnahmen, welche alle für jeden einzelnen Spektralkanal und jeweils in jedem Spektralkanal separat durchgeführt werden.

Eine erste wichtige Korrekturmassnahme besteht in einer Kontrast-Korrektur. Bedingt durch Eigenschaften realer (d.h. nicht-idealer) Objektive, Filter, Abschlussfenster des Bildsensors etc. liefert jeder Bildpunkt des Messobjekts auch einen nicht vernachlässigbaren Beitrag zur Helligkeit aller anderen Bildpunkte. Diese Beiträge sind einerseits abstandsabhängig und anderseits lageabhängig und insgesamt so gross, dass die geforderte Messgenauigkeit (< 1 dL*) nicht erreichbar ist. (dl* ist die Einheit des Helligkeitsfehlers im CIE-L*a*b* System.) Hier setzt nun die Kontrast-Korrektur ein.

Die Kontrast-Korrektur umfasst mindestens eine sog. Streulicht-Korrektur, bei der für jeden Bildpunkt der (abstandsabhängige) Streulichteinfluss der übrigen Bildpunkte auf den betreffenden Bildpunkt abgezogen wird. Der dafür (nach konventionellen Methoden) erforderliche Rechenaufwand wäre enorm und unpraktikabel (bei angenommenen 300'000 Bildpunkten 90 Milliarden Multiplikationen und ebensoviele Additionen sowie die einmalige Bestimmung der 90 Milliarden Multiplikationsfaktoren). Es wird daher gemäss einem wesentlichen Aspekt der Erfindung für die Streulicht-Korrektur nur ein verhältnismässig kleiner Umgebungsbereich (z.B. 16x16 Pixel) des jeweiligen Bildpunkts herangezogen und die Korrektur nur in einem inneren Kernbereich (z.B. 8x8 Pixel) dieses Umgebungsbereichs mit voller Auflösung durchgeführt. Ausserhalb dieses Bereichs erfolgt die Korrektur mit binär abnehmender Auflösung. Näheres ist weiter unten noch ausgeführt.

Vorzugsweise umfasst die Kontrast-Korrektur auch noch eine (vorangehende) sog. Reflex-Korrektur. Bei dieser - eine spezielle Form der Streulicht-Korrekturdarstellenden - Korrekturmassnahme werden insbesondere vom Kamera-Objektiv erzeugte, punktsymmetrische Reflexionsbilder ("Geister-Bilder") von den Messdaten des Messobjekts abgezogen. Die (hauptsächlich lageabhängige) Reflex-Korrektur erfolgt anhand von aus Test-Bildern ermittelten Reflexkorrekturkoeffizienten und wird ebenfalls weiter unten noch näher erläutert. Die Reflex-Korrektur wird vor der Streulicht-Korrektur durchgeführt.

Weissnormalisierung:

Eine weitere wichtige Korrekturmassnahme besteht in einer Weissnormalisierung. Auch wenn die Bildausleuchtung des Messobjekts möglichst konstant und homogen erfolgt, ist zur exakten Remissionsmessung eine an sich bekannte Weissnormalisierung mit Hilfe eines Weissreferenzbildes erforderlich. Als Weissreferenzbild wird die mit dem Bildsensor 22 gemachte, wie vorstehend erläutert Streulicht-korrigierte und abgespeicherte Aufnahme (gemessene Remissionswerte) eines homogen weissen (körperlichen) Bildes mit (z.B. mittels eines separaten Spektralfotometers ermittelten) bekannten Referenz-Remissionswerten in jedem Spektralkanal verstanden. Das homogen weisse körperliche Bild kann als Bestandteil der Messvorrichtung ausgebildet sein und in der Ebene des Messobjekts in den Messstrahlengang einbringbar bzw. wieder aus diesem entfernbar angeordnet sein.

Zur Weissnormalisierung wird für jedes Bildelement (in jedem Spektralkanal) der Quotient des Remissionswerts des Messobjekts durch den entsprechenden (abgespeicherten) Remissionswert des Weissreferenzbilds berechnet. Das Ergebnis sind normalisierte Remissionswerte für jedes Bildelement in jedem Farbkanal. Absolute Remissionswerte erhält man durch Multiplikation der so normalisierten Remissionswerte mit den entsprechenden (bekannten) Referenz-Remissionswerten (absolute Weiss-Kalibrierungswerte) des homogenen weissen (körperlichen) Bilds. Die Weissnormalisierung ist an sich eine bekannte Korrekturmassnahme und bedarf deshalb keiner näheren Erläuterung.

Rand-Weissnormalisierung:

Ein weiterer wichtiger Korrekturschritt nach der Kontrast-Korrektur bzw. nach der Weissnormalisierung besteht in einer sog. Rand-Weiss-Normalisierung. Diese hat zum Ziel, die in der Praxis stets vorhandenen integralen Beleuchtungsschwankungen von Messobjektbelichtung zu Messobjektbelichtung zu kompensieren. Herangezogen wird dazu ein definierter Randbereich des schon im Zusammenhang mit der Weissnormalisierung erwähnten homogen weissen (körperlichen) Bilds oder eine entsprechende homogen weisse Objekt-Maske mit vorzugsweise gleichem Weiss-Ton wie das Bild. Alternativ kann ein das Messobjekt abschliessender weisser Randbereich desselben herangezogen werden. Falls der Randbereich des homogen weissen körperlichen Bilds verwendet wird, kann dieser gleichzeitig als Objekt-Maske dienen.

Aus den aktuell gemessenen Remissionswerten der zum herangezogenen Randbereich gehörenden Bildelemente (Pixel) wird die aktuelle mittlere Helligkeit (Mittelwert der Remissionswerte) des Randbereichs bestimmt. Ferner wird (aus den abgespeicherten Daten) die entsprechende mittlere Helligkeit für einen korrespondierenden Randbereich des Weissreferenzbilds bestimmt. Der Quotient der mittleren Helligkeiten des Randbereichs des Weissreferenzbilds und des aktuell gemessenen Randbereichs wird als Korrekturfaktor verwendet, mit welchem bei der Rand-Weiss-Normalisierung die Messobjekt-Messdaten multipliziert werden, so dass die mittlere Rand-Weiss-Helligkeit der aktuellen Messung nach der Rand-Weiss-Normalisierung mit derjenigen des Weissreferenzbilds übereinstimmt. Durch die Rand-Weiss-Normalisierung wird die mittlere Helligkeit der Rand-Weiss-Bereiche auf den Weiss-Kalibrierungswert gehoben bzw. gesenkt, und integrale Beleuchtungsschwankungen bei den einzelnen Messobjektbelichtungen werden auf diese Weise kompensiert.

Die so korrigierten Bilddaten können dann in beliebiger Weise ausgewertet bzw. weiter verarbeitet werden. Insbesondere können daraus in an sich bekannter Weise Farbmasszahlen der einzelnen Bildpunkte des Messobjekts errechnet und z.B. zur Steuerung einer Druckmaschine herangezogen werden.

Reflexkorrektur:

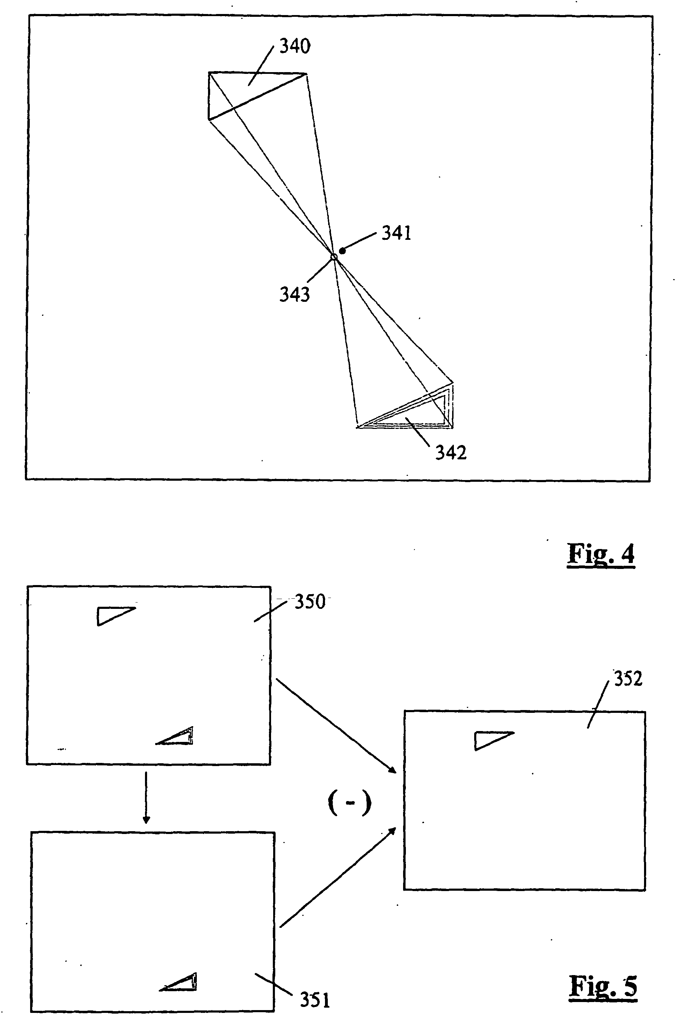

Wie schon erwähnt, erzeugt die Abbildungsoptik, speziell das Objektiv der CCD-Kamera, ein Reflexionsbild, welches im allgemeinen bezüglich der optischen Achse bzw. bezüglich des Bildmittelpunkts punktsymmetrisch zum eigentlichen Bildinhalt liegt. Das Reflexionsbild ist zwar relativ lichtschwach (Grössenordnung 0,2% der Helligkeit des Ausgangsbilds), aber doch deutlich feststellbar. Ausserdem ist das Reflexionsbild unscharf. Je nach Zentrierung der Linsen bzw. Objektive des Abbildungssystems kann das Symmetriezentrum auch leicht ausserhalb des Bildmittelpunkts liegen und ferner auch das Reflexionsbild etwas kleiner oder auch etwas grösser als das Ausgangsbild sein. In Fig. 4 ist die mit der Messvorrichtung erzeugte Aufnahme eines Messobjekts dargestellt, welches ein einzelnes helles Dreieck 340 aufweist, sonst aber überall schwarz ist. Der Bildmittelpunkt ist mit 341 bezeichnet. Wie man erkennt, enthält die Aufnahme ein Reflexionsbild 342, das bezüglich eines hier etwas neben dem Bildmittelpunkt 341 liegenden Symmetriezentrums 343 punktsymmetrisch zum Dreieck 340 liegt. Im gewählten Beispiel ist das Reflexionsbild 342 etwa gleich gross wie das Dreieck 340, die Vergrösserung beträgt also 1,0. Das Reflexionsbild 342 ist relativ unscharf, was in der Fig. 4 durch die dreifache und gestrichelte Darstellung angedeutet ist. Die Helligkeit des Reflexionsbilds 342 beträgt etwa 0,2% der Helligkeit des Dreiecks 340.

Messungen an verschiedenen Testbildern der in Figur 4 gezeigten Art haben ergeben, dass (für eine gegebene Messvorrichtung) die Helligkeit des Reflexionsbilds nur geringfügig abstandsabhängig ist und die Abstandsabhängigkeit mit für die Praxis ausreichender Genauigkeit linear angenähert werden kann. Beispielsweise beträgt die Helligkeit des Reflexionsbilds in den vom Symmetriezentrum entferntesten Bildpunkten ca. 0,25% und in der Nähe des Symmetriezentrums ca. 0,2% der Helligkeit der entsprechenden Bildpunkte des Originalbilds. Die Unschärfe des Reflexionsbilds entspricht einer Tiefpassfilterung mit etwa +/- 56 bis 64 Pixel Breite.

Zur Vorbereitung der Reflexionskorrektur werden empirisch durch Ausmessung mehrerer Testbilder die Lage des Symmetriezentrums 343 des Reflexionsbilds sowie die relativen Helligkeiten des Reflexionsbilds im zentralen und im peripheren Bildbereich und ein eventueller Vergrösserungs- bzw. Verkleinerungsfaktor als Korrektur-Parameter ermittelt.

Mit diesen empirischen Korrektur-Parametern wird dann die Reflex-Korrektur so durchgeführt, dass aus dem gemessenen Bild durch Spiegelung um das Symmetriezentrum und Tiefpassfiltrierung ("Verunschärfung bzw. "Verschmierung), ggf. Vergrösserung bzw. Verkleinerung sowie (linear zwischen den Extremwerten interpolierte) abstandsabhängige Reduktion der Helligkeiten ein künstliches Reflexionsbild erzeugt und dieses dann vom Ausgangsbild abgezogen wird. Die Fig. 5 verdeutlicht dies. Das durch die unkorrigierten Messdaten dargestellte Bild ist mit 350, das berechnete "künstliche" Reflexionsbild mit 351 und das Reflex-korrigierte Bild mit 352 bezeichnet. Die Tiefpassfiltrierung erfolgt in an sich bekannter Weise durch laufende Mittelwertbildung über die jeweils ca. +/- (64/2) benachbarten Bildpunkte (in beiden Dimensionen). Die Spiegelung und Vergrösserung/Verkleinerung erfolgt nach den an sich bekannten Methoden der Bildverarbeitung durch Koordinatentransformationen.

Die gemäss Vorstehendem ermittelten Korrektur-Parameter sind erste Näherungen und ergeben in der Regel noch keine optimale Korrektur. In der Praxis müssen die Korrektur-Parameter ein bis mehrere mal iterativ angepasst werden, bis die Reflex-Korrektur befriedigende Ergebnisse liefert (Überprüfung durch Anzeige der Resthelligkeiten bzw. Restfehler). Wenn jedoch die optimalen Korrektur-Parameter einmal gefunden sind, können sie (für die gegebene Messvorrichtung) unverändert beibehalten werden.

Die vorstehend beschriebene Reflex-Korrektur ist relativ rechenaufwendig. Gemäss einem wichtigen Aspekt der Erfindung kann der Aufwand dadurch verringert werden, dass die Berechnung des künstlichen Reflexionsbilds mit geringerer Auflösung erfolgt. Welche Auflösung den idealen Kompromiss zwischen Rechenaufwand und Korrekturgenauigkeit ergibt, muss durch Ausprobieren herausgefunden werden. Bei einer praktischen Realisation der Messvorrichtung hat sich eine Auflösung von 1/8 der Auflösung der vollen Auflösung (des unkorrigierten Bilds) als geeignet erwiesen, wodurch der Rechenaufwand um den Faktor 64 sank. Die Berechnung von Hilfsbildem mit gröberer Auflösung erfolgt auf dieselbe Art und Weise wie weiter unten im Zusammenhang mit der Streulicht-Korrektur beschrieben.

Streulichtkorrektur:

Die Streulicht-Korrektur zieht für jeden Bildpunkt den abstandsabhängigen Helligkeitsbeitrag aller den Bildpunkt umgebenden Bildpunkte vom Helligkeitswert (Remissionswert) des betreffenden Bildpunkts ab. Der von einem Bildpunkt $i$ von einem Bildpunkt $j$ empfangene Helligkeitsbeitrag $\Delta R_{i,j}$ berechnet sich zu $\Delta R_{i,j} = k_{i,j} * R_j$. Dabei ist $R_j$ der Remissionswert des Bildpunkts $j$ und $k_{i,j}$ ein vom Abstand zwischen den Bildpunkten $i$ und $j$ abhängiger Koeffizient, der natürlich vorher ermittelt worden sein muss. Für eine Anordnung von N*M Bildpunkten, die von 1 bis N*M durchnumeriert seien, berechnet sich für jeden Bildpunkt i der Beitrag der Umgebungspunkte wie folgt:

$$\Delta R_i = \sum_{j=1}^{N*M} k_{i,j} * R_j \qquad \text{(Formel 1)}$$

Der streulichtkorrigierte Remissionswert $R'_i$ beträgt $R_i - \Delta R_i$. Wie man leicht erkennt, sind zur Berechnung der Korrekturen $(N*M)^2$ Koeffizienten und dementsprechend viele Multiplikationen und Additionen erforderlich. Bei 300'000 Bildpunkten wäre, wie schon erwähnt, der dafür erforderliche Rechenaufwand gigantisch und völlig unpraktikabel.

Erfindungsgemäss wird nun so vorgegangen, dass jeweils nur für einen relativ kleinen Bildbereich (typisch 16*16 Pixel) und innerhalb desselben auch nur für einen noch kleineren Kernbereich (typisch 8*8 Pixel) eine Korrektur mit voller Auflösung erfolgt. Ausserhalb des genannten Bildbereichs erfolgt die Korrektur mit vorzugsweise binär gestufter, mit zunehmender Entfernung geringerer Auflösung. Selbstverständlich kann auch eine andere als binäre Abstufung der Auflösung gewählt werden.

Dafür werden aus dem Bild mit voller Auflösung (Rohmessdaten bzw. bereits Reflex-korrigierte Messdaten) z.B. fünf Hilfsbilder mit zum Beispiel binär abgestufter Auflösung mit festem Bezug zum Bildrand berechnet. Das durch die Rohdaten bzw. Reflex-korrigierten Messdaten definierte Bild mit der vollen Auflösung ist im folgenden als Ausgangsbild bezeichnet. Die Hilfsbilder haben 1/2, 1/4, 1/8, 1/16 und 1/32 der Auflösung des Ausgangsbilds. Die Korrekturen werden aus dem Ausgangsbild und den Hilfsbildern ermittelt. Zur Berechnung eines Hilfsbilds mit der nächstniedrigeren (halben) Auflösung werden in an sich bekannter Weise jeweils 4 benachbarte Bildpunkte zusammengefasst, wobei der Mittelwert der Remissionen dieser 4 Bildpunkte den Remissionswert des entsprechenden Bildpunkts des gröberen Hilfsbilds darstellt.

Für das folgende wird zur Illustration rein beispielsweise für das Ausgangsbild eine (durch den Bildsensor gegebene) höchste Auflösung von 480*640 entsprechend 307'200 Bildpunkten zugrundegelegt. Entsprechend weisen dann die fünf Hilfsbilder Auflösungen von 240*320 (76'800 Bildpunkte), 120*160 (19'200 Bildpunkte), 60*80 (4800 Bildpunkte), 30*40 (1200 Bildpunkte) und 15*20 (300 Bildpunkte) auf.

Nun werden jeweils zum Beispiel 8*8 Pixel umfassende Kernbereiche so festgelegt, dass sie einerseits das gesamte Bild (höchster Auflösung) überlappungsfrei und lükkenlos abdecken und anderseits in die Raster der Hilfsbilder mit (hier binär) abgestufter Auflösung passen. Die Positionen bzw. Koordinaten (z.B. eines Eckpunkts) der Kernbereiche bezüglich der Raster des Bilds mit voller Auflösung und jedes Hilfsbilds werden gespeichert. Die Kernbereiche decken sich mit den Bildpunkten des Hilfsbilds mit 1/8 Auflösung.

Gemäss der Erfindung wird die Streulicht-Korrektur für jede Auflösung separat berechnet. Für das Ausgangsbild mit der vollen Auflösung und die Hilfsbilder mit den binär abgestuften Auflösungen werden (für jeden Bildpunkt des Ausgangsbilds) sechs Streulichtbeiträge von definierten Auswertungsbereichen berechnet. Die sechs Streulichtbeiträge werden zu einem Gesamt-Streulichtbeitrag aufaddiert und letzterer schliesslich von den Rohdaten der einzelnen Bildpunkte subtrahiert.

Die folgenden Operationen beziehen sich jeweils auf einen 8*8-Kernbereich und werden für alle Kernbereiche (sequentiell) durchgeführt.

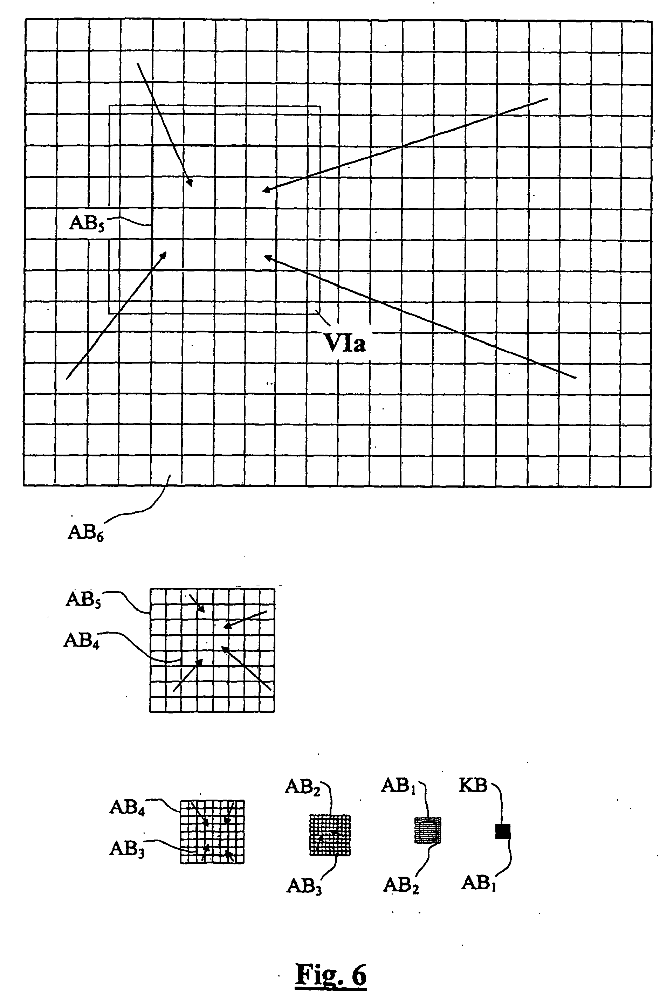

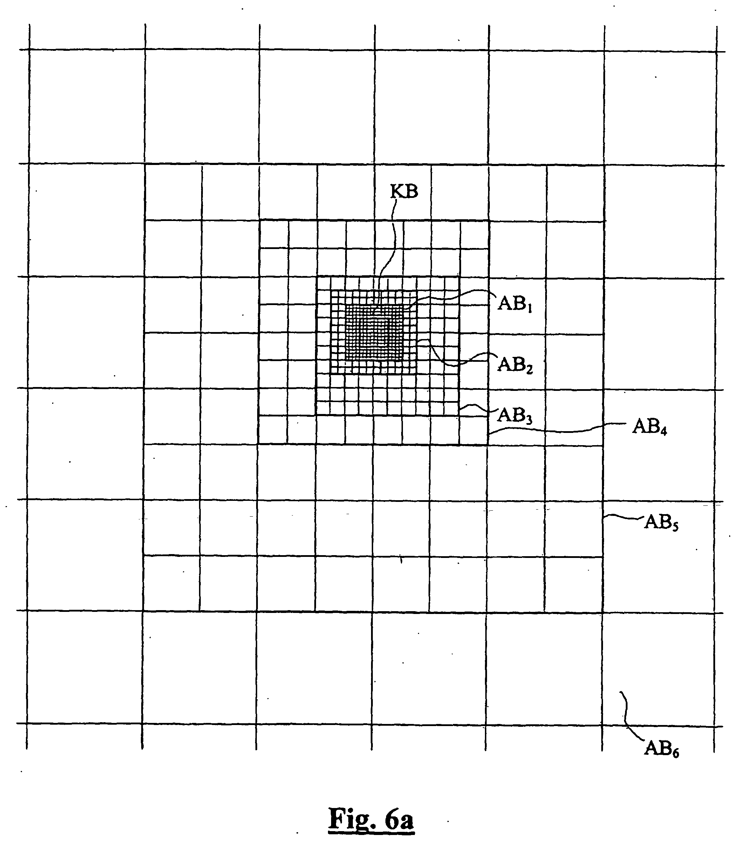

Für die Berechnung der Streulichtkorrektur eines beliebigen Bildpunkts des Ausgangsbilds mit der vollen Auflösung wird zunächst (aus den zuvor definierten Kembereichen) derjenige 8*8-Kernbereich KB bestimmt, in welchem der zu korrigierende Bildpunkt liegt. Anschliessend wird für diesen Kernbereich für das Ausgangsbild und die fünf Hilfsbilder mit binär abgestufter Auflösung je ein Auswertungsbereich $AB_1$ - $AB_6$ festgelegt, der einerseits den Kernbereich KB abdeckt und anderseits mit dem Raster des jeweils gröberen Hilfsbilds übereinstimmt, wobei sich die Bereichsgrenzen mit den Bildelementgrenzen gleicher Auflösung decken müssen. Dadurch können die gleichen Hilfsbilder abgestufter Auflösung für alle Bildpunkte des Bilds verwendet werden. Eine mögliche beispielsweise Festlegung der sechs Auswertungsbereiche ist in den Figuren 6 und 6a dargestellt. Der äusserste Auswertungsbereich $AB_6$ bedeckt das gesamte Hilfsbild mit 1/32 Auflösung (Fig. 6). Die innersten fünf Auswertungsbereiche $AB_1$ - $AB_5$ sind deutlich kleiner (Fig. 6a). Die nachstehende Tabelle 4 fasst die charakteristischen Daten der einzelnen (beispielsweisen) Bereiche zusammen:

Tabelle 4

| Bereich | Auflösung | Dimension | Anzahl Elemente |
|---|---|---|---|
| Kernbereich KB | 1/1 | 8*8 | 64 |
| Auswertungsbereich 1 | 1/1 | 16*16 | 256 |
| Auswertungsbereich 2 | 1/2 | 12*12 | 144 |

Tabelle 4 (fortgesetzt)

| Bereich | Auflösung | Dimension | Anzahl Elemente |
|---|---|---|---|
| Auswertungsbereich 3 | 1/4 | 10*10 | 100 |
| Auswertungsbereich 4 | 1/8 | 8*8 | 64 |
| Auswertungsbereich 5 | 1/16 | 8*8 | 64 |
| Auswertungsbereich 6 | 1/32 | 15*20 | 300 |

Die Festlegung der Dimensionen der Auswertungsbereiche erfolgt empirisch, so dass sich eine genügende Streulichtkorrektur ergibt. Je grösser die Auswertungsbereiche mit höherer Auflösung gewählt werden, desto besser ist die Korrektur, wobei aber gleichzeitig auch der Berechnungsaufwand steigt. Die beispielsweise Dimensionierung gemäss Tabelle 4 liefert die erforderliche Korrekturgenauigkeit bei vertretbarem Rechenaufwand.

Die relativen Lagen des Kernbereichs und der Auswertungsbereiche in den jeweils grösseren Auswertungsbereichen ändert sich natürlich je nach dem, wo der Kernbereich im Bild bzw. äussersten Auswertungsbereich liegt. Massgebend ist die Bedingung, dass die Bereichsgrenzen mit dem Raster des jeweils gröberen Hilfsbilds übereinstimmten und sich die Bereichsgrenzen mit den Bildelementgrenzen gleicher Auflösung decken müssen. Mit dieser Bedingung (und den einmal festgelegten Dimensionen) können die Auflösungsbereiche - abgesehen von gleichwertigen symmetrischen Lösungen - eindeutig festgelegt (berechnet) und abgespeichert werden.

Streulichtkorrektur eines Kernbereichs von 8*8 Pixel:

Beginnend mit der gröbsten Bildauflösung (15*20) werden nun die Streulichtbeiträge der Bildpunkte des gröbsten Auswertungsbereichs $AB_6$ auf die Bildpunkte des nächst inneren Auswertungsbereichs $AB_5$ berechnet (vgl. auch Fig. 6). Da im Auswertungsbereich $AB_5$ insgesamt 16 Bildpunkte des Auswertungsbereichs $AB_6$ liegen, sind für die Berechnung der Streulichtanteile für den aktuellen Auswertungsbereich $AB_5$ 16*(300-16) = 4544 Korrektur-Koeffizienten erforderlich, für das gesamte Hilfsbild mit 1/32 Auflösung sind es 300*300 = 90'000 Koeffizienten. Die Streulichtbeiträge des Auswertungsbereichs $AB_6$ werden zwischengespeichert.

Zudem werden die Hilfsbilddaten des Auswertungsbereichs $AB_5$ in einen Datenpuffer kopiert und von diesen Daten die Streulichtbeiträge des ringförmigen Auswertungsbereichs $AB_6$ subtrahiert. Dies erfolgt in Vorbereitung der Streulichtberechnung für den nächst inneren Auswertungsbereich, damit die vom Streulicht des ringförmigen Auswertungsbereichs $AB_6$ befreiten Werte zur Verfügung stehen, denn nur diese Werte erzeugen einen weiteren Streulichtanteil für die folgenden Auswertungsbereiche.

Nun werden in analoger Weise die Streulichtbeiträge der Bildpunkte des bereits von den Streulichtbeiträgen des Auswertungsbereichs AB6 befreiten Auswertungsbereichs $AB_5$ (Daten aus dem Datenpuffer) auf die Bildpunkte des nächst inneren Auswertungsbereichs $AB_4$ berechnet. Im Auswertungsbereich $AB_4$ liegen 16 Bildpunkte des Auswertungsbereichs $AB_5$, daher sind für die Berechnung 16*(64-16) = 768 Korrektur-Koeffizienten erforderlich, für den gesamten Auswertungsbereich $AB_5$ sind es 64*64 = 4096 Koeffizienten. Die Streulichtbeiträge des Auswertungsbereichs $AB_5$ werden zwischengespeichert, und die Hilfsbilddaten des nächst inneren Auswertungsbereichs $AB_4$ werden in einen weiteren Datenpuffer kopiert. Ferner werden von diesen Hilfsbilddaten in analoger Weise die Streulichtbeiträge des ringförmigen Auswertungsbereichs $AB_5$ subtrahiert, so dass für den folgenden Schritt wiederum streulichtbereinigte Daten zur Verfügung stehen.

In analoger Weise werden fortlaufend die Streulichtbeiträge der Bildpunkte der (bereits streulichtbereinigten) Auswertungsbereiche $AB_4$, $AB_3$, $AB_2$ und $AB_1$ auf die Bildpunkte der jeweils nächst inneren Auswertungsbereiche $AB_3$, $AB_2$, $AB_1$ und jeden der 8*8 Bildpunkte des Kernbereichs KB berechnet und zwischengespeichert. Dazu sind, wie anhand der Fig. 6a nachgezählt werden kann, 975, 2304, 5120 und 16384 bzw. 4096, 10000, 20736 und 65536 Korrektur-Koeffizienten erforderlich. (Mit Ausnahme des Kernbereichs wird für jeden Auswertungsbereich jeweils nur der Einfluss des umgebenden Ringbereichs auf den inneren Zentralbereich berechnet - vgl. auch Fig. 6.)

Nach Durchführung dieser Berechnungen liegen für alle 8*8 Bildpunkte des Kernbereichs jeweils die sechs Streulichtbeiträge der Auswertungsbereiche $AB_1$ - $AB_6$ vor. Diese sechs Streulichtbeiträge werden für jeden Bildpunkt des Kernbereichs KB zu einem Gesamt-Streulichtbeitrag aufaddiert, wobei der Streulichtbeitrag jedes Bildpunkts jeweils an vier Bildpunkte des Hilfsbilds nächsthöherer Auflösung übertragen wird. Der Gesamt-Streulichtbeitrag (oder -anteil) wird dann vom (ggf.vorher Reflexkorrigierten) Remissionswert des jeweiligen Bildpunkts des Kernbereichs abgezogen.

Streulichtkorrektur des ganzen Bilds:

Für die Streulichtkorrektur der übrigen Bildpunkte des Ausgangsbilds werden dieselben Berechnungen für alle übrigen Kernbereiche durchgeführt. Dabei werden gemäss einem weiteren wichtigen Gedanken der Erfindung immer dieselben (im hier beschriebenen Ausführungsbeispiel insgesamt 194464) Korrektur-Koeffizienten verwendet. Für jeden Kernbereich ist natürlich tatsächlich immer nur eine Teilmenge (hier z.B. 30095) aus den insgesamt 194464 Korrektur-Koeffizienten erforderlich. Die für jeden Kernbereich effektiv benutzten Korrektur-Koeffizienten sind durch die relativen Positionen des Kernbereichs und der Auswertungsbereiche festgelegt.

Wie die vorstehenden Zahlenbeispiele verdeutlichen, ist der Rechenaufwand bei der erfindungsgemässen Streulicht-Korrektur um Grössenordnungen geringer als bei der klassischen Vorgehensweise. Die Streulicht-Korrektur wird auf diese Weise überhaupt erst praktisch machbar.

Streulichtkorrektur einzelner Bildbereiche:

In praktischen Anwendungen interessieren oft nur die Spektren oder Farbmasszahlen aus bestimmten Bildbereichen. In diesen Fällen genügt eine Streulichtkorrektur für die Bildpunkte dieses bzw. dieser Bildbereiche. Es werden daher die Streulichtkorrekturen nur für diejenigen Kernbereiche berechnet, die mindestens einen Bildpunkt der interessierenden Bildbereiche enthalten.

Bestimmung der Streulichtkorrekturkoeffizienten:

Im folgenden wird die Bestimmung der für die Streulicht-Korrektur erforderlichen Korrektur-Koeffizienten erläutert.

Die in der weiter oben stehenden Formel 1 verwendeten $(N*M)^2$ Korrektur-Koeffizienten $k_{i,j}$ lassen sich als Koeffizienten-Matrix organisieren. Wenn anderseits $(s_{i,j})$ eine Streulichtkoeffizientenmatrix darstellt, deren Elemente $s_{i,j}$ den Streulichteinfluss $\Lambda R_{i,j}$ jedes einzelnen Bildpunkts i auf jeden einzelnen Bildpunkt j beschreiben, so dass die Formel $\Lambda R_{i,j} = s_{i,j}*R_i$ gilt, dann ist die Korrektur-Koeffizientenmatrix offensichtlich die inverse Matrix von $(s_{i,j})$. Wenn die Elemente der Streulichtkoeffizientenmatrix $(s_{i,j})$ bestimmt sind, lassen sich daher daraus durch Invertierung die Elemente der Korrektur-Koeffizientenmatrix berechnen.

Die Elemente der Streulichtkoeffizientenmatrix $(s_{i,j})$ lassen sich durch Streulichtmessungen an Testbildern bestimmen. Prinzipiell kann dazu wie folgt vorgegangen werden: Für einen Bildpunktbereich von beispielsweise 16*16 Bildpunkten werden Testbilder mit jeweils nur einem einzigen hell weissen Bildpunkt verwendet, alle anderen Bildpunkte sind schwarz. Gemessen wird die Remission $R_i$ des einen weissen Punkts und die durch den Streulichteinfluss des einen weissen Punkts erzeugten Remissionen $\Lambda R_{i,j}$ aller übrigen Bildpunkte. Die Messwerte werden dann in die Streulicht-Matrizen-Gleichung eingesetzt und daraus die Streulichtkoeffizienten $s_{i,j}$ als Unbekannte berechnet.

Für die eindeutige Bestimmung der Elemente einer Streulichtkoeffizientenmatrix sind genausoviele unabhängige Messungen wie die Anzahl der unabhängigen Matrix-Elemente erforderlich. Für die weiter oben erläuterten sechs Korrektur-Koeffizienten-Matrizen der sechs Auflösungsstufen (die sich ja als Inverse zu entsprechenden sechs Streulichtkoeffizientenmatrizen berechnen lassen) mit insgesamt 194464 Koeffizienten wären entsprechend mindestens 194464 Messvorgänge erforderlich. Dies ist natürlich nicht praktikabel. Ausserdem lassen sich die extrem geringen Streulichtbeiträge einzelner Bildpunkte nicht genügend präzis messen.

Um den Aufwand zur Bestimmung der Korrektur-Koeffizienten zu reduzieren, wird von der Tatsache Gebrauch gemacht, dass der Streulichteinfluss im Rahmen der hier erforderlichen Genauigkeit nicht ortsabhängig sondern nur abstandsabhängig ist. Erfindungsgemäss wird wie folgt vorgegangen:

Es werden z.B. acht Testbilder mit speziellen Streulichtelementen angefertigt und mit der Messvorrichtung vermessen (ausgewertet). Jedes Streulichtelement besteht (ähnlich den Kalibrierungselementen) aus einem einzigen weissen Kreisring. Die (mittleren) Radien und Ringbreiten der Streulichtelemente sind für jedes Testbild unterschiedlich. Insgesamt sind acht verschieden grosse Streulichtelemente vorgesehen, deren mittlere Radien beispielsweise rund 2, 4, 8, 16, 25, 50, 100 und 200 Pixel betragen. Die Ringbreiten variieren von ca. 1 Pixel beim kleinsten bis zu etwa 40 Pixel beim grössten Ring. Jedes Testbild enthält vorzugsweise mehrere gleiche Streulichtelemente, um mehrere Messresultate zu erhalten und den Messfehler auf diese Weise reduzieren zu können. Insbesondere die kleinsten Streulichtelemente sind insofern etwas kritisch, als das Messzentrum (Pixel) nicht immer genau in die Kreisringmitte fällt. Es werden daher vorzugsweise auf diesen Testbildern Gruppen von Streulichtelementen vorgesehen, wobei die Elemente einer Gruppe bezüglich des Pixel-Rasters jeweils um ½ Pixel oder ¼ Pixel versetzt sind. Auf diese Weise liegt mindestens in einem Streulichtelement der Gruppe immer ein Pixel genügend genau im Zentrum des Streulichtelements. Verwendet werden dann die Messwerte aus diesem Streulichtelement (erkennbar am geringsten Streulicht).

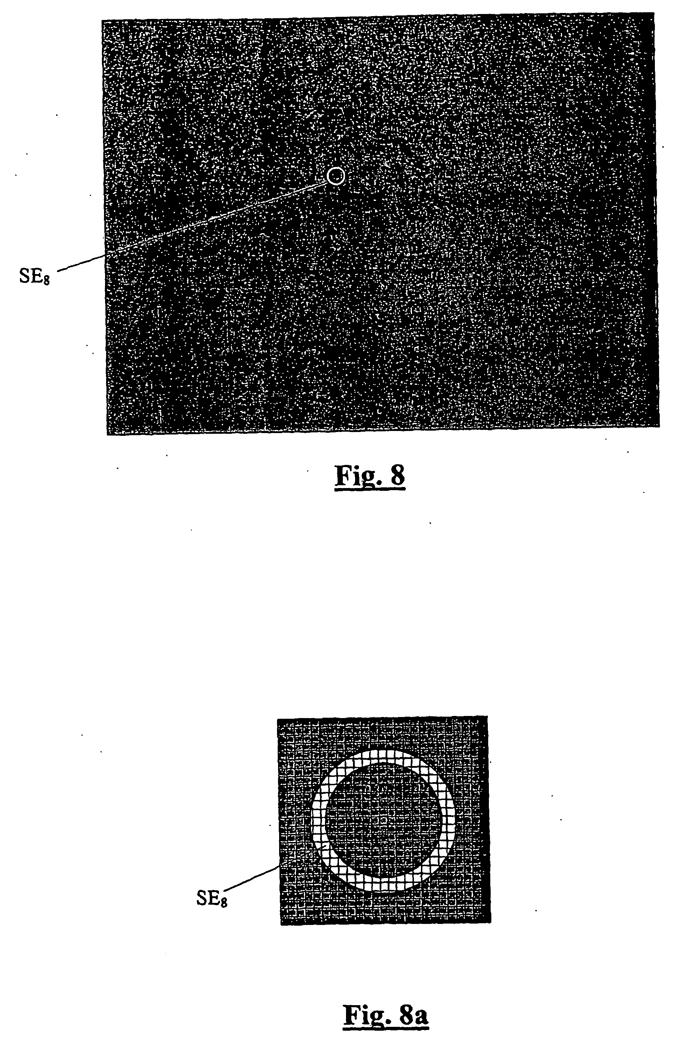

Die Fig. 8 zeigt ein Testbild mit einem einzigen Streulichtelement $SE_8$; die Fig. 8a zeigt das Streulichtelement $SE_8$ in vergrösserter Darstellung.

Gemessen wird, wie schon erwähnt, das Streulicht im Zentrum der Streulichtelemente. Das gemessene Streulicht wird jeweils auf 1 Pixel normalisiert (gemessene Remission dividiert durch die Ringfläche in Pixel-Einheiten). Der Quotient normalisiertes Streulicht durch Helligkeit der weissen Pixel ergibt den relativen Streulichteinfluss und damit diejenigen Koeffizienten der Streulicht-Matrix, die für alle diejenigen Bildpunktpaare gelten, die um den (mittleren) Ringradius des gemessenen Streulichtelements von einander entfernt sind.

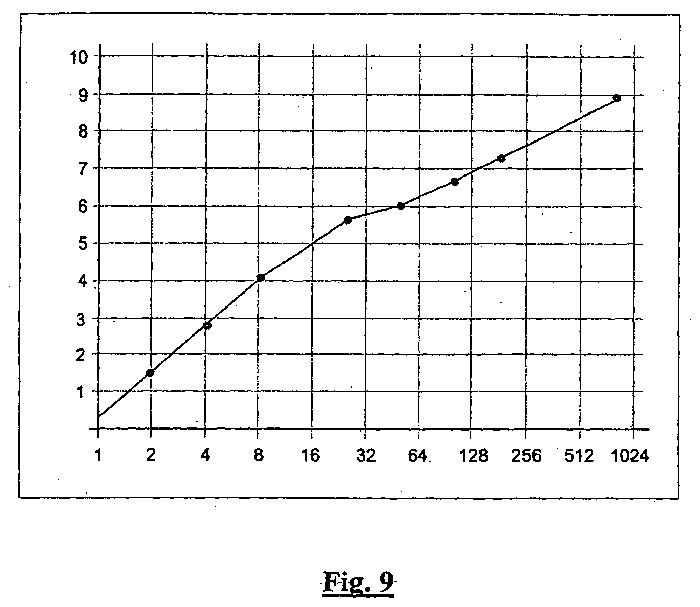

Anhand zahlreicher Testmessungen mit verschieden grossen Streulichtelementen konnte festgestellt werden, dass der Streulichteinfluss im doppelt logarithmischen Massstab zumindest abschnittsweise und auch insgesamt angenähert linear mit der Entfernung abnimmt. Die Fig. 9 zeigt einen beispielsweisen, anhand von 8 Streulichtelementen ausgemessenen Zusammenhang zwischen Streulicht und Bildpunktabstand-grafisch in doppelt logarithmischer Skalierung. Die Abszisse gibt den Abstand in Pixel-Einheiten an, die Ordinate den negativen Logarithmus des relativen Streulichteinflusses bzw. des Streulichtkoeffizienten. Beispielsweise beträgt der Streulichtkoeffizient bei einem Abstand von rund 50 Pixeln $10^{-5.993}$. Bei einem Abstand von rund 2 Pixeln beträgt der Streulichtkoeffizient $10^{-1,564}$, ist also bereits um über 4 Zehnerpotenzen grösser!

Die anhand der 8 (oder mehr) Streulichtelemente gemessenen 8 (oder mehr) Streulichtkoeffizienten für durch die Ringradien definierte 8 (oder mehr) Pixelabstände können nun als Stützstellen für eine stückweise lineare Interpolation verwendet werden. Für jede Auflösungsstufe sind die Abstände der möglichen Bildpunkte-Paarungen bekannt (im hier gewählten Beispiel insgesamt 194464 Paarungen). Durch die erwähnte Interpolation können für jeden vokommenden Pixel-Abstand die zugehörigen Streulichtkoeffizienten mit ausreichender Genauigkeit errechnet werden. Für jede Auflösungsstufe ergibt sich so eine Streukoeffizienten-Matrix der Dimensionen 256*256, 144*144, 100*100, 64*64, 64*64 und 300*300, insgesamt also 194464 Streulichtkoeffizienten, von denen natürlich sehr viele gleich sind, weil viele Bildpunkt-Paarungen denselben Pixel-Abstand ergeben.

Die so berechneten sechs Streulichtkoeffizienten-Matrizen werden nun invertiert und ergeben damit die sechs Korrektur-Koeffizienten-Matrizen. Diese werden noch mit dem jeweils zugeordneten Kalibrierungsfaktor gemäss den vorstehenden Erläuterungen multipliziert und stehen dann für die Berechnung der Streulicht-Korrektur zur Verfügung. Unter der Voraussetzung, dass die Berechnungsroutinen in einer leistungsfähigen Programmiersprache, beispielsweise etwa C++, programmiert sind, lässt sich die Berechnung der Korrektur-Koeffizienten-Matrizen anhand der Messdaten der Testbilder auf jedem durchschnittlichen Büro-Rechner in wenigen Sekunden durchführen.

Kalibrierung der Streulichtkorrektur:

Die Streulicht-Korrektur kann noch optimiert werden, wenn gemäss einem weiteren wichtigen Aspekt der Erfindung eine Kalibrierung der Streulicht-Korrektur vorgenommen wird, deren Ziel es ist, den mittleren quadratischen Restfehler der Korrektur zu minimieren. Unter Restfehler wird die in einem Bildpunkt nach der Streulicht-Korrektur noch vorhandene Helligkeitsdifferenz (zum theoretisch erwarteten Wert) verstanden. Zum Beispiel sollte in einem schwarzen Bildbereich die gemessene Helligkeit (nach der Streulicht-Korrektur) eigentlich 0 sein. Bei ungenügend genauer Korrektur des Streulichts wird aber noch eine (sehr geringe) Resthelligkeit gemessen, welche den Restfehler für den betreffenden Bildbereich darstellt.

Die Kalibrierung der Streulicht-Korrektur besteht im wesentlichen darin, dass die Streulichtbeiträge der sechs Auswertungsbereiche mit (in der Regel verschiedenen) Gewichten bewertet und die gewichtete Summe (anstele der normalen ungewichteten Summe) der einzelnen Streulichtbeiträge vom Remissionswert des Bildpunkts abgezogen wird. Dies kann durch die folgende Formel 2 dargestellt werden:

$$\Delta R = G_1 {*} \Delta R_{AB1} + G_2 {*} \Delta R_{AB2} + G_3 {*} \Delta R_{AB3} + G_4 {*} \Delta R_{AB4} + G_5 {*} \Delta R_{AB5} + G_6 {*} \Delta R_{AB6}$$

Darin sind $\Delta R$ die Gesamt-Streulicht-Korrektur eines Bildpunkts, $\Delta R_{AB1}$ .... $\Delta R_{AB6}$ die einzelnen Streulicht-Korrekturbeiträge der einzelnen Auswertungsbereiche $AB_1$ ... $AB_6$ und $G_1$ ... $G_6$ sechs zuvor einmalig bestimmte Gewichts- oder Kalibrierungsfaktoren.

In der Praxis werden nicht die Streulicht-Korrekturbeiträge gewichtet, sondern die für ihre Berechnung herangezogenen Korrektur-Koeffizienten (der jeweiligen Auflösungsstufe) mit dem der jeweiligen Auflösungsstufe zugeordneten Kalibrierungsfaktor multipliziert, beispielsweise also die 65536 Korrektur-Koeffizienten der Auflösungsstufe 1/1 mit dem Kalibrierungsfaktor $G_1$, die 20736 Koeffizienten der Auflösungsstufe 1/2 mit dem Kalibrierungsfaktor $G_2$, u.s.f. Wegen der Linearität der diversen Rechenoperationen liefert dies dasselbe Ergebnis, braucht aber nur einmal durchgeführt zu werden und ist deshalb insgesamt weniger aufwendig.

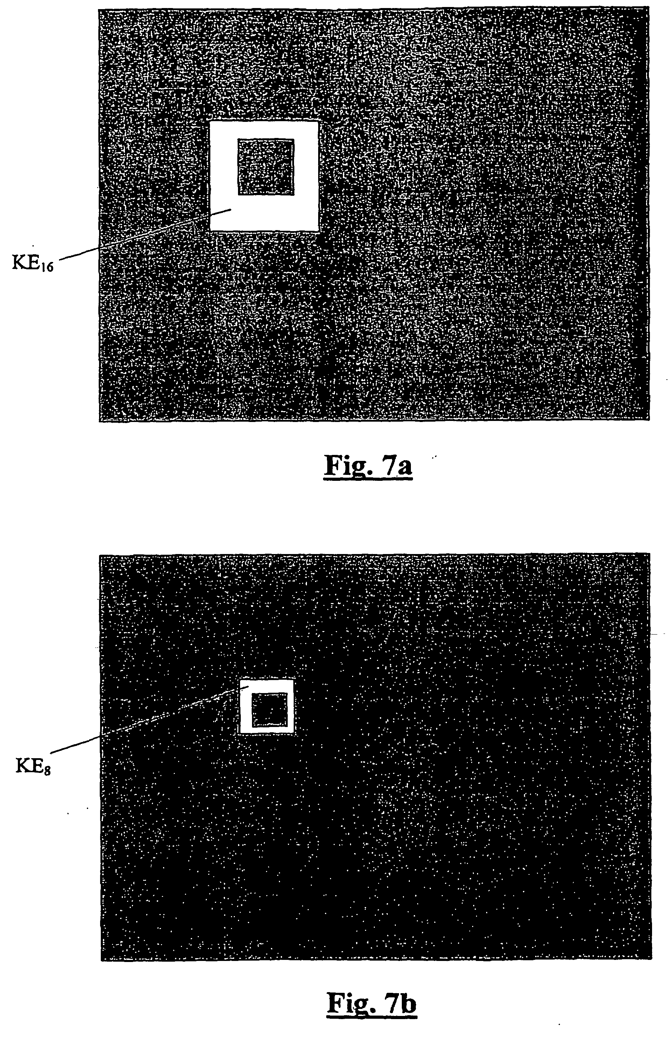

Die Bestimmung der Kalibrierungsfaktoren erfolgt durch Ausmessung und Auswertung von Testbildern mit geeigneten Bildmustern. Vorzugsweise sind die Testbilder mit speziellen Kalibrierungselementen versehen. Für jede Auflösung ist ein eigenes Testbild mit einem auf die Auflösung abgestimmten Kalibrierungselement vorgesehen. Obwohl die Kalibrierungselemente im Prinzip beliebig ausgebildet sein können, empfiehlt es sich, die Kalibrierungselemente den Auswertungsbereichen nachzubilden, um die Unabhängigkeit der Messungen zu gewährleisten. Die Figuren 7a und 7b zeigen, wie die Kalibrierungselemente vorzugsweise aussehen können. Dargestellt sind zwei Testbilder mit je einem Kalibrierungselement $KE_{16}$ bzw. $KE_8$ für die Auflösungsstufen 1/16 und 1/8, die übrigen Testbilder bzw.

ihre Kalibrierungselemente sind analog ausgebildet.

Wie man erkennt, besteht jedes Kalibrierungselement nur aus einem weissen (eckigen) Ring. Die Aussenabmessungen des Rings entsprechen dem Auswertungsbereich $AB_n$ der Auflösungsstufe n, für welche das Kalibrierungselement vorgesehen ist (vgl. Fig. 6). Das (schwarze) Zentrum des Kalibrierungselements stimmt mit dem nächst inneren Auswertungsbereich bzw. dem Kernbereich überein. Das für die gröbste Auflösungsstufe (1/32) vorgesehene Kalibrierungselement ist insofern "entartet", als sich ausserhalb des weissen Rings keine schwarze Fläche anschliesst. Bezugspunkt für die Messungen bzw. Auswertungen ist jeweils der Kernbereich (8*8 Pixel in der vollen Auflösung) des (schwarzen) Zentrums des Kalibrierungselements. (Die schwarzen Bereiche der Testbilder sind aus zeichnerischen Gründen durch ein Graumuster dargestellt.)

Jedes Testbild wird nun ausgemessen, und im Kernbereich seines Kalibrierungselements werden die sechs Streulicht-Korrektur-Beiträge der einzelnen Auflösungsstufen bestimmt. Diese seien im folgenden als $S_{n,1}$, $S_{n,2}$ .... $S_{n,6}$ bezeichnet, wobei der Index n für das jeweilige Testbild bzw. die jeweilige Messung steht. Insgesamt sind für die Bestimmung der sechs Kalibrierungsfaktoren mindestens sechs (im mathematischen Sinn) unabhängige Messungen erforderlich. Ferner wird für jedes Testbild eine Dunkelmessung (weisse Ringe schwarz abgedeckt) durchgeführt, und es werden für dieselben Kernbereiche die entsprechenden Streulicht-Korrektur-Beiträge bestimmt. Diese seien im folgenden als $B_{n,1}$, $B_{n,2}$ .... $B_{n,6}$ bezeichnet, wobei der Index n wiederum für das jeweilige Testbild bzw. die jeweilige Messung steht. Die Dunkelmessung ist erforderlich, weil die schwarzen Bereiche der Testbilder aus physikalischen Gründen nicht ideal schwarz sind und ebenfalls Streulicht erzeugen. Anschliessend werden die Differenzen $D_{n,i}$ zwischen den Beiträgen $S_{n,i}$ der Hell-Messung und den Beiträgen $B_{n,i}$ der Dunkelmessung gebildet. Schliesslich wird noch für jede Messung n der Restfehler $F_n$ bestimmt (wie oben definiert).

Die 6*n Differenzen $D_{n,i}$ und die n Restfehler $F_n$ werden in das folgende Gleichungssystem mit den sechs Kalibrierungsfaktoren $G_i$ als Unbekannten eingesetzt:

$$- F_n = G_1*D_{n,1} + G_2*D_{n,2} + G_3*D_{n,3} + G_4*D_{n,4} + G_5*D_{n,5} + G_6*D_{n,6}$$

Dieses mindestens 6 Gleichungen umfassende Gleichungssystem wird nun nach den Unbekannten $G_1$ ... $G_6$ aufgelöst mit der Randbedingung, dass die Fehlerquadratsumme minimal wird (Ausgleichsrechnung). Wie man sieht, lässt sich das Gleichungssystem als Matrizen-Gleichung

$$(- F) = (D) * (G) \qquad \text{(Formel 2)}$$

schreiben, in der (- F) einen Fehlervektor mit den Komponenten - Fn, (G) einen Unbekanntenvektor mit den Kompo-nenten $G_1$ ... $G_6$ und (D) eine Koeffizienten-Matrix mit den Elementen $D_{n,i}$ darstellen. Die Matrizen-Gleichung wird nach den bekannten Regeln der Ausgleichsrechnung wie folgt nach den Unbekannten gelöst:

$$(G) = [(D)^T * (D)]^{-1} * (D)^T * (- F) \qquad \text{(Formel 3)}$$

Darin bedeuten $(D)^T$ die transponierte Matrix zu (D) und $[(D)^T * (D)]^{-1}$ die inverse Matrix zum Produkt der beiden Matrizen $(D)^T$ und (D).

Mit den auf diese Weise ermittelten Kalibrierungsfaktoren $G_1$ ... $G_6$ werden die Korrektur-Koeffizienten der einzelnen Auflösungsstufen multipliziert (kalibriert). Diejenigen Koeffizienten, welche sich auf den jeweils zu korrigierenden Bildpunkt selbst beziehen (in Matrix-Darstellung die Diagonal-Elemente), werden natürlich nicht kalibriert.

Weissnormalisierung und Rand-Weissnormalisierung:

Auf die Reflex- und die Streulicht-Korrektur erfolgen die Weiss-Normalisierung und die Rand-Weissnormalisierung in der schon weiter vorne beschriebenen Weise. Danach erfolgt als letzte Korrekturmassnahme noch eine Spektral- bzw. Wellenlängen-Korrektur für die zur spektralen Aufspaltung eingesetzten Interferenzfilter.

Spektralkorrektur:

Die Spektralcharakteristik von Interferenzfiltern ist, wie schon weiter oben erwähnt, abhängig vom Eintrittswinkel der Lichtstrahlen. Dieser Winkel ist nicht konstant, sondern abhängig von der Position des gemessenen Bildpunkts auf dem Messobjekt. Er lässt sich jedoch aus der Position des jeweiligen Bildpunkts berechnen, und daraus kann wiederum die tatsächlich wirksame Filtercharakteristik für die betreffende Bildpunktposition bestimmt werden.

Wenn mit $(SP)_\gamma$ das unter einem gegebenen Einfallswinkel $\gamma$ unter Verwendung gegebener Interferenzfilter gemessene Spektrum bezeichnet ist, dann lässt sich daraus ein auf die nominellen Spektralbereiche (z.B. 400, 420, 440 ....680, 700 nm) korrigiertes Spektrum $(SP)_k$ durch eine Spline-Interpolation gemäss der Formel 4:

$$(SP)_k = (IM)_\gamma * (SP)_\gamma \qquad\qquad (\text{Formel 4})$$

berechnen. Darin ist $(IM)_\gamma$ eine für den Einfallswinkel $\gamma$ gültige Interpolationsmatrix mit $n^2$ Elementen, wenn n die Anzahl der diskreten Spektralwerte (Wellenlängenbereiche) des Spektrums ist. Im vorliegenden Beispiel mit 16 diskreten Spektralkanälen besitzt die Matrix 16*16 = 256 Elemente. Die Elemente der Interpolationsmatrix $(IM)_\gamma$ können in an sich bekannter Weise durch Testmessungen ermittelt werden.

Für die erfindungsgemässe Spektral-Korrektur werden nun für eine Anzahl, z.B. 50, diskreter Einfallswinkel $\gamma$ (z.B. zwischen 0° und 17°) die zugehörigen Interpolationsmatrizen $(IM)_\gamma$ bestimmt und abgespeichert. Jedem Bildpunktbereich von z.B. 8*8 Pixeln wird entsprechend seiner Lage auf dem Messobjekt einer dieser 50 diskreten Einfallswinkel $\gamma$ zugeordnet. Anschliessend wird das (zuvor natürlich gemäss den vorstehenden Ausführungen Kontrast-korrigierte) Spektrum $(SP)_\gamma$ jedes Bildpunkts anhand der zum zugeordneten Einfallswinkel $\gamma$ gehörenden Interpolationsmatrix $(IM)_\gamma$ gemäss obenstehender Formel 4 auf die nominellen Spektralbereiche von z.B. 400, 420, 440 ....680, 700 nm umgerechnet.

Nach dieser letzten Korrekturmassnahme liegen für jeden Bildpunkt des Messobjekts korrigierte Bilddaten (Spektren) 72 vor, welche dann für die weitere Verwendung bzw. Auswertung zur Verfügung stehen. Die Präzision der auf diese Weise gewonnenen korrigierten Bilddaten ist mit derjenigen von mittels herkömmlicher Farbmessgeräte gemessenen Bilddaten vergleichbar.

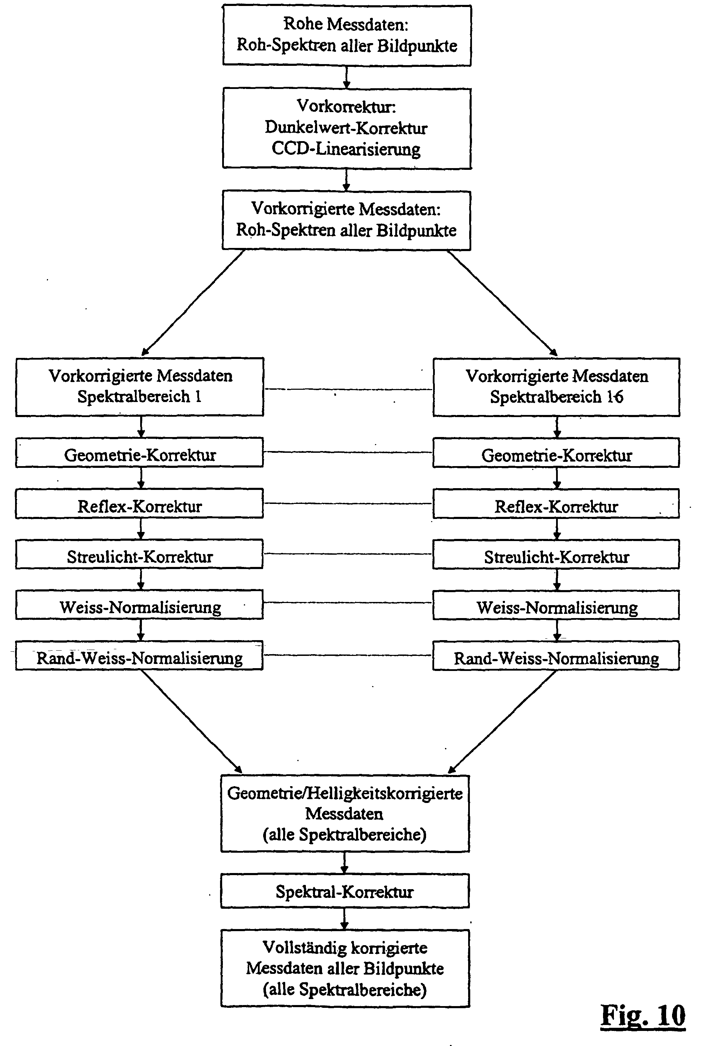

In der Fig. 10 sind die diversen Korrekturmassnahmen zusammenfassend nochmals übersichtlich dargestellt.

**Patentansprüche**

1. Vorrichtung zur bildelementweisen fotoelektrischen Ausmessung eines flächigen Messobjekts, mit Abbildungsmitteln (3,21) zur Abbildung des Messobjekts (M) auf eine zweidimensionale Anordnung (22) von Lichtwandlerelementen, mit im Abbildungsstrahlengang vorgesehenen Filtermitteln (66) zur wellenlängenselektiven Filterung des auf die Lichtwandlerelemente auftreffenden Messlichts, mit Signalaufbereitungsmitteln (23) zur Aufbereitung der von den Lichtwandlerelementen erzeugten elektrischen Signale und Umwandlung derselben in entsprechende digitale Rohmessdaten (71), und mit Datenverarbeitungsmitteln (7) zur Verarbeitung der Rohmessdaten in die Farben der einzelnen Bildelemente des Messobjekts repräsentierende Bilddaten (72), wobei die Datenverarbeitungsmittel (7) zur Durchführung einer Streulicht-Korrektur zur Reduktion von Streulichteinflüssen ausgebildet sind, wobei die Datenverarbeitungsmittel (7) aus den Messdaten des Messobjekts ein Streulichtbild berechnen und dieses bildpunktweise von den Messdaten des Messobjekts abziehen, **dadurch gekennzeichnet, dass** die Datenverarbeitungsmittel (7) die Berechnung des Streulichtbilds mit vorzugsweise binär abgestuften Auflösungen durchführen, wobei für jeden Bildpunkt eine Anzahl von den Bildpunkt umgebenden Auswertungsbereichen abgestufter Abmessungen festgelegt wird, beginnend mit dem größten Auswertungsbereich und der gröbsten Auflösung sukzessive der Streulichtbeitrag jedes Auswertungsbereichs auf den jeweils nächst inneren Auswertungsbereich mit der nächst feineren Auflösung berechnet wird und nur für den innersten Auswertungsbereich der Streulichtbeitrag mit der höchsten Auflösung berechnet wird.

2. Vorrichtung nach Anspruch 1, **dadurch gekennzeichnet, dass** die Datenverarbeitungsmittel (7) die Berechnung der Streulichtbeiträge der einzelnen Auswertungsbereiche anhand von Streulichtkorrekturkoeffizienten durchführen, wobei jeder Auflösungsstufe ein eigener Satz von Streulichtkorrekturkoeffizienten zugeordnet ist und die Streulichtkorrekturkoeffizienten jeder Auflösungsstufe diejenigen Streulichtanteile beschreiben, die ein Bildpunkt der betreffenden Auflösungsstufe von den anderen Bildpunkten derselben Auflösungsstufe erhält.

3. Vorrichtung nach Anspruch 2, **dadurch gekennzeichnet, dass** die Datenverarbeitungsmittel (7) die Berechnung der Streulichtbeiträge der einzelnen Auswertungsbereiche anhand von kalibrierten Streulichtkorrekturkoeffizienten durchführen, wobei die je einer Auflösungsstufe zugeordneten Sätze von Streulichtkorrekturkoeffizienten mit je einem Kalibrierungsfaktor gewichtet werden und die Kalibrierungsfaktoren so gewählt sind, dass der nach der Streulichtkorrektur verbleibende Restfehler minimal ist.

**4.** Vorrichtung nach einem der vorangehenden Ansprüche, **dadurch gekennzeichnet, dass** die Datenverarbeitungsmittel (7) zur Beschränkung der Streulicht-Korrektur auf auswählbare Bereiche des Messobjekts ausgebildet sind.

**5.** Vorrichtung nach einem der vorangehenden Ansprüche, **dadurch gekennzeichnet, dass** die Datenverarbeitungsmittel (7) zur Durchführung einer Geometrie-Korrektur ausgebildet sind, welche die von den Abbildungsmitteln (3, 21) verursachten geometrischen Verzerrungen kompensiert.

**6.** Vorrichtung nach Anspruch 5, **dadurch gekennzeichnet, dass** die Datenverarbeitungsmittel (7) eine Korrekturtabelle enthalten, in der für jeden Bildpunkt anhand eines Testbilds ermittelte Positionsabweichungen gegenüber einer Sollposition abgespeichert sind, und dass die Datenverarbeitungsmittel (7) jeden Bildpunkt des Messobjekts aufgrund der in der Korrekturtabelle abgespeicherten Positionsabweichungen positionskorrigieren.

**7.** Vorrichtung nach Anspruch 6, **dadurch gekennzeichnet, dass** in der Korrekturtabelle jeweils einem kleinen Bereich von nebeneinanderliegenden Bildpunkten dieselben Positionsabweichungen zugeordnet sind.

**8.** Vorrichtung nach einem der vorangehenden Ansprüche, **dadurch gekennzeichnet, dass** die Datenverarbeitungsmittel (7) zur Durchführung einer Reflex-Korrektur zur Reduktion von Reflexionseffekten ausgebildet sind.

**9.** Vorrichtung nach Anspruch 8, **dadurch gekennzeichnet, dass** die Datenverarbeitungsmittel (7) aus den Messdaten des Messobjekts ein punktsymmetrisches Reflexionsbild berechnen und dieses bildpunktweise von den Messdaten des Messobjekts abziehen.

**10.** Vorrichtung nach Anspruch 9, **dadurch gekennzeichnet, dass** die Datenverarbeitungsmittel (7) die Berechnung des Reflexionsbilds mit einer niedrigeren Auflösung als diejenige der Messdaten durchführen.

**11.** Vorrichtung nach einem der vorangehenden Ansprüche, **dadurch gekennzeichnet, dass** die Datenverarbeitungsmittel (7) zur Durchführung einer Weiß-Normalisierung ausgebildet sind, wobei die Messdaten des Messobjekts auf die Helligkeitswerte eines Weißreferenzbilds normalisiert werden.

**12.** Vorrichtung nach einem der vorangehenden Ansprüche, **dadurch gekennzeichnet, dass** die Datenverarbeitungsmittel (7) zur Durchführung einer Rand-Weiß-Normalisierung ausgebildet sind, wobei bei jeder Messung die mittlere Helligkeit eines weißen Randbereichs bestimmt und die Messdaten auf diese mittlere Helligkeit des weißen Randbereichs normalisiert werden.

**13.** Vorrichtung nach einem der vorangehenden Ansprüche, **dadurch gekennzeichnet, dass** die Datenverarbeitungsmittel (7) zur Durchführung einer Spektral-Korrektur zur Berücksichtigung der vom Eintrittswinkel der Lichtstrahlen abhängigen Spektralcharakteristik von Interferenzfiltern ausgebildet sind.

**14.** Vorrichtung nach Anspruch 13, **dadurch gekennzeichnet, dass** die Datenverarbeitungsmittel (7) für eine vorgegebene Anzahl von diskreten Einfallswinkeln je eine Interpolationsmatrix gespeichert haben, dass die Datenverarbeitungsmittel jedem Bildpunkt aufgrund seiner relativen Lage auf dem Messobjekt einen diskreten Einfallswinkel zuordnen, und dass die Datenverarbeitungsmittel das durch die Messdaten gebildete Spektrum des betreffenden Bildpunkts mittels der zum jeweiligen diskreten Einfallswinkel gehörenden Interpolationsmatrix korrigieren.

**15.** Vorrichtung nach einem der vorangehenden Ansprüche, **dadurch gekennzeichnet, dass** die zweidimensionale Lichtwandlerelementanordnung und die Abbildungsmittel durch eine Videokamera (2) mit einem zweidimensionalen Bildsensor (22) und einem Abbildungsobjektiv (21) mit Eintrittsblende (21a) gebildet sind.

**16.** Vorrichtung nach Anspruch 15, **dadurch gekennzeichnet, dass** die Videokamera (2) als Schwarz/Weiß-Kamera ausgebildet ist und dass die Filtermittel zur wellenlängenselektiven Filterung des auf die Lichtwandlerelemente auftreffenden Messlichts einen Satz von vorzugsweise als Interferenzfilter ausgebildeten Bandpassfiltern (66) sowie Antriebsmittel (61-65) umfassen, um die Bandpassfilter (66) selektiv, vorzugsweise sequentiell in den Abbildungsstrahlengang (32) einzuführen.

**17.** Vorrichtung nach Anspruch 16, **dadurch gekennzeichnet, dass** etwa sechzehn Bandpassfilter (66) von je etwa 20 nm Bandbreite vorgesehen sind, die im wesentlichen den Spektralbereich von 400 - 700 nm abdecken.

**18.** Vorrichtung nach einem der Ansprüche 16 bis 17, **dadurch gekennzeichnet, dass** die Bandpassfilter (66) an einem rotierenden Filterrad (6) angeordnet sind.

19. Vorrichtung nach einem der vorangehenden Ansprüche, **dadurch gekennzeichnet, dass** die Filtermittel zur wellenlängenselektiven Filterung des auf die Lichtwandlerelemente auftreffenden Messlichts durch unmittelbar auf den Lichtwandlerelementen angeordnete Bandpassfilter gebildet sind.

20. Vorrichtung nach einem der vorangehenden Ansprüche, **dadurch gekennzeichnet, dass** sie mehrere Videokameras (2) mit je einem zweidimensionalen Bildsensor (22) und je einem Abbildungsobjektiv (21) mit Eintrittsblende (21a) aufweist, wobei jede Videokamera (2) z.B. durch vorgeschaltete Bandpassfilter (66) zur Messung eines anderen Wellenlängenbereichs ausgebildet ist.

### Claims

1. Device for the pixel-by-pixel photoelectric measurement of a flat measurement object, comprising imaging means (3, 21) for imaging the measurement object (M) onto a two-dimensional arrangement (22) of light converter elements, filter means (66) provided in the imaging beam path for the wavelength-selective filtering of the measurement light impinging on the light converter elements, signal processing means (23) for processing the electrical signals produced by the light converter elements and for converting said signals into corresponding digital raw measurement data (71), and data processing means (7) for processing the raw measurement data into image data (72) which represent the colours of the individual pixels of the measurement object, wherein the data processing means (7) are designed to carry out a scattered light correction in order to reduce the influences of scattered light, wherein the data processing means (7) calculate a scattered light image from the measurement data of the measurement object and subtract said scattered light image pixel-by-pixel from the measurement data of the measurement object, **characterized in that** the data processing means (7) calculate the scattered light image with preferably binary-graduated resolutions, wherein, for each pixel, a number of evaluation regions of graduated dimensions which surround the pixel are defined, and starting with the largest evaluation region and the coarsest resolution the scattered light contribution of each evaluation region to the respectively next inward evaluation region with the next finer resolution is successively calculated, and the scattered light contribution with the highest resolution is calculated only for the innermost evaluation region.

2. Device according to Claim 1, **characterized in that** the data processing means (7) calculate the scattered light contributions of the individual evaluation regions on the basis of scattered light correction coefficients, wherein a dedicated set of scattered light correction coefficients is assigned to each resolution level and the scattered light correction coefficients of each resolution level describe those scattered light components which a pixel of the relevant resolution level receives from the other pixels of the same resolution level.

3. Device according to Claim 2, **characterized in that** the data processing means (7) calculate the scattered light contributions of the individual evaluation regions on the basis of calibrated scattered light correction coefficients, wherein the sets of scattered light correction coefficients which are in each case assigned to a resolution level are weighted in each case by a calibration factor and the calibration factors are selected in such a way that the residual error remaining after scattered light correction is minimal.

4. Device according to any of the preceding claims, **characterized in that** the data processing means (7) are designed to limit the scattered light correction to selectable regions of the measurement object.

5. Device according to any of the preceding claims, **characterized in that** the data processing means (7) are designed to carry out a geometry correction which compensates the geometric distortions caused by the imaging means (3, 21).

6. Device according to Claim 5, **characterized in that** the data processing means (7) contain a correction table in which there are stored, for each pixel, position deviations from a desired position as determined by means of a test image, and **in that** the data processing means (7) correct the position of each pixel of the measurement object on the basis of the position deviations stored in the correction table.

7. Device according to Claim 6, **characterized in that**, in the correction table, the same position deviations are in each case assigned to a small region of neighbouring pixels.

8. Device according to any of the preceding claims, **characterized in that** the data processing means (7) are designed to carry out a reflex correction in order to reduce reflection effects.

9. Device according to Claim 8, **characterized in that** the data processing means (7) calculate a point-symmetrical reflection image from the measurement data of the measurement object and subtract said reflection image pixel-by-pixel from the measurement data of the measurement object.

10. Device according to Claim 9, **characterized in that** the data processing means (7) calculate the reflection image with a lower resolution than that of the measurement data.

11. Device according to any of the preceding claims, **characterized in that** the data processing means (7) are designed to carry out a white standardization, wherein the measurement data of the measurement object are standardized to the brightness values of a white reference image.

12. Device according to any of the preceding claims, **characterized in that** the data processing means (7) are designed to carry out a white border standardization, wherein, for each measurement, the mean brightness of a white border region is determined and the measurement data are standardized to this mean brightness of the white border region.

13. Device according to any of the preceding claims, **characterized in that** the data processing means (7) are designed to carry out a spectral correction in order to take account of the spectral characteristics of interference filters which depend on the angle of incidence of the light beams.

14. Device according to Claim 13, **characterized in that** an interpolation matrix is stored in the data processing means (7) in each case for a predefined number of discrete angles of incidence, **in that** the data processing means assign a discrete angle of incidence to each pixel on the basis of its relative position on the measurement object, and **in that** the data processing means correct the spectrum of the relevant pixel formed by the measurement data, by means of the interpolation matrix associated with the respective discrete angle of incidence.

15. Device according to any of the preceding claims, **characterized in that** the two-dimensional light converter element arrangement and the imaging means are formed by a video camera (2) with a two-dimensional image sensor (22) and an imaging lens (21) with entry shutter (21a).

16. Device according to Claim 15, **characterized in that** the video camera (2) is designed as a black and white camera and **in that** the filter means for the wavelength-selective filtering of the measurement light impinging on the light converter elements comprise a set of bandpass filters (66), which are preferably designed as interference filters, and also drive means (61-65) for moving the bandpass filters (66) selectively, preferably sequentially, into the imaging beam path (32).

17. Device according to Claim 16, **characterized in that** approximately sixteen bandpass filters (66) of in each case 20 nm bandwidth are provided, which essentially cover the spectral range of 400 - 700 nm.

18. Device according to either of Claims 16 and 17, **characterized in that** the bandpass filters (66) are arranged on a rotating filter wheel (6).

19. Device according to any of the preceding claims, **characterized in that** the filter means for the wavelength-selective filtering of the measurement light impinging on the light converter elements are formed by bandpass filters arranged directly on the light converter elements.

20. Device according to any of the preceding claims, **characterized in that** it comprises a number of video cameras (2) each with a two-dimensional image sensor (22) and an imaging lens (21) with entry shutter (21a), wherein each video camera (2) is designed to measure a different wavelength range, for example by means of upstream bandpass filters (66).

**Revendications**

1. Dispositif de mesure photoélectrique pixel par pixel d'un objet de mesure plat, avec des moyens de reproduction (3, 21), pour la reproduction de l'objet à mesurer (M) sur un agencement bidimensionnel (22) d'éléments convertisseurs de lumière, avec des moyens filtrants (66) prévus dans la trajectoire du faisceau de reproduction pour le filtrage sélectif par longueurs d'ondes de la lumière de mesure incidente sur les éléments convertisseurs de lumière, avec des moyens pour la régénération de signaux (23) pour la régénération de signaux électriques générés par les éléments convertisseurs de lumière et pour la transformation de ces derniers en données de mesure numériques brutes (71) et avec des moyens pour le traitement de données (7) pour le traitement des données de mesure brutes dans les couleurs des données d'image (72) représentant des éléments d'image individuels de l'objet à mesurer, les moyens pour le traitement des données (7) étant conçus pour la réalisation d'une correction de la lumière diffuse pour la réduction des influences de la lumière diffuse, les moyens pour le traitement des données (7) calculant une image de lumière diffuse à partir des données de mesure de l'objet à mesurer et la retirant pixel par pixel des données de mesure de l'objet à mesurer,

**caractérisé en ce que**

les moyens pour le traitement de données (7) procèdent au calcul de l'image de lumière diffuse avec des résolutions à degrés de préférence binaires, un nombre de plages d'évaluation de dimensions dégradées entourant le pixel étant déterminé pour chaque pixel, à commencer par la plus grande plage d'évaluation et la résolution la plus grossière, successivement l'apport de lumière diffuse de chaque plage d'évaluation étant calculé avec la résolution immédiatement plus fine sur la plage d'évaluation immédiatement plus à l'intérieur et l'apport de lumière diffuse avec la plus haute résolution n'étant calculé que pour la plage d'évaluation la plus à l'intérieur.

2. Dispositif selon la revendication 1, **caractérisé en ce que** les moyens pour le traitement de données (7) procèdent au calcul des apports de lumière diffuse de chaque plage d'évaluation à l'aide de coefficients de correction de lumière diffuse, un propre groupe de coefficients de correction de lumière diffuse étant affecté à chaque plage de résolution et les coefficients de correction de lumière diffuse de chaque plage de résolution décrivant les fractions de lumière diffuse qu'un pixel du degré de résolution concerné reçoit des autres pixels du même degré de résolution.

3. Dispositif selon la revendication 2, **caractérisé en ce que** les moyens pour le traitement de données (7) procèdent au calcul des apports de lumière diffuse de chaque plage d'évaluation à l'aide de coefficients de correction de lumière diffuse calibrés, les groupes de coefficients de correction de lumière diffuse respectivement affectés à un degré de résolution étant pondérés avec respectivement un facteur de calibrage et les facteurs de calibrage étant choisis de façon à ce que l'erreur résiduelle restant après la correction de la lumière diffuse soit minime.

4. Dispositif selon l'une quelconque des revendications précédentes, **caractérisé en ce que** les moyens pour le traitement de données (7) sont conçus pour limiter la correction de la lumière diffuse sur des plages sélectionnables de l'objet à mesurer.

5. Dispositif selon l'une quelconque des revendications précédentes, **caractérisé en ce que** les moyens pour le traitement de données (7) sont conçus pour procéder à une correction de la géométrie, qui compense les distorsions géométriques provoquées par les moyens pour la reproduction (3, 21).

6. Dispositif selon la revendication 5, **caractérisé en ce que** les moyens pour le traitement de données (7) contiennent un tableau de corrections dans lequel pour chaque pixel des écarts de position déterminés à l'aide d'une image de test par rapport à une position de consigne sont sauvegardés et **en ce que** les moyens pour le traitement des données (7) corrigent la position de chaque pixel de l'objet à mesurer sur la base des écarts de position sauvegardés dans le tableau de corrections.

7. Dispositif selon la revendication 6, **caractérisé en ce que** les mêmes écarts de position sont affectés à respectivement une petite plage de pixels adjacents dans le tableau de corrections.

8. Dispositif selon l'une quelconque des revendications précédentes, **caractérisé en ce que** les moyens pour le traitement de données (7) sont conçus pour procéder à une correction de reflet pour la réduction des effets de réflexion.

9. Dispositif selon la revendication 8, **caractérisé en ce que** les moyens pour le traitement de données (7) calculent une image de réflexion à symétrie ponctuelle à partir des données de mesure de l'objet à mesurer et la soustraient pixel par pixel des données de mesure de l'objet à mesurer.

10. Dispositif selon la revendication 9, **caractérisé en ce que** les moyens pour le traitement de données (7) procèdent au calcul de l'image de réflexion avec une résolution plus basse que celle des données de mesure.

11. Dispositif selon l'une quelconque des revendications précédentes, **caractérisé en ce que** les moyens pour le traitement de données (7) sont conçus pour procéder à une normalisation des blancs, les données de mesure de l'objet à mesurer étant normalisées par rapport aux valeurs de luminosité d'une image de blancs de référence.

12. Dispositif selon l'une quelconque des revendications précédentes, **caractérisé en ce que** les moyens pour le traitement de données (7) sont conçus pour procéder à une normalisation marginale des blancs, la luminosité moyenne d'une zone marginale blanche étant déterminée à chaque mesure et les données de mesure étant normalisées par rapport à cette luminosité moyenne de la zone marginale blanche.

13. Dispositif selon l'une quelconque des revendications précédentes, **caractérisé en ce que** les moyens pour le traitement de données (7) sont conçus pour procéder à une correction spectrale pour la prise en considération de la caractéristique spectrale de filtres à interférences dépendant de l'angle d'incidence des faisceaux lumineux.

14. Dispositif selon la revendication 13, **caractérisé en ce que** les moyens pour le traitement de données (7) ont sauvegardé une matrice d'interpolation pour un nombre prédéfini d'angles d'incidence discrets, **en ce que** les moyens pour le traitement de données affectent à chaque pixel un angle d'incidence discret, en fonction de sa position relative sur l'objet à mesurer et **en ce que** les moyens pour le traitement de données corrigent le spectre du pixel concerné formé par les données de mesure à l'aide de la matrice d'interpolation correspondant à l'angle d'incidence discret respectif.

15. Dispositif selon l'une quelconque des revendications précédentes, **caractérisé en ce que** l'agencement bidimensionnel d'éléments convertisseurs de lumière et les moyens de reproduction sont formés par une caméra vidéo (2) avec un capteur vidéo bidimensionnel (22) et avec un objectif de reproduction (21) avec diaphragme d'entrée (21 a).

16. Dispositif selon la revendication 15, **caractérisé en ce que** la caméra vidéo (2) est conçue en tant que caméra noir et blanc et **en ce que** les moyens filtrants pour le filtrage sélectif par longueurs d'ondes de la lumière de mesure incidente sur les éléments convertisseurs de lumière comprennent un jeu de filtres passe-bande (66) conçus de préférence en tant que filtres à interférences, ainsi que des moyens d'entraînement (61 à 65) pour introduire de façon sélective, de préférence séquentielle les filtres passe-bande (66) dans la trajectoire du faisceau de reproduction (32).

17. Dispositif selon la revendication 16, **caractérisé en ce qu'**on a prévu environ seize filtres passe-bande (66) d'une largeur de bande d'environ 20 nm, qui recouvrent sensiblement le domaine spectral de 400 à 700 nm.

18. Dispositif selon l'une quelconque des revendications 16 à 17, **caractérisé en ce que** les filtres passe-bande (66) sont disposés sur une roue de filtres (6) rotative.

19. Dispositif selon l'une quelconque des revendications précédentes, **caractérisé en ce que** les moyens filtrants pour le filtrage sélectif par longueurs d'ondes de la lumière de mesure incidente sur les éléments convertisseurs de lumière sont formés par des filtres passe-bande directement disposés sur les éléments convertisseurs de lumière.

20. Dispositif selon l'une quelconque des revendications précédentes, **caractérisé en ce qu'**il comporte plusieurs caméras vidéo (2) avec chacune un capteur vidéo bidimensionnel (22) et chacune un objectif de reproduction (21) avec diaphragme d'entrée (21 a), chaque caméra vidéo (2) étant conçue par exemple par des filtres passe-bande montés en amont (66) pour la mesure d'une autre plage de longueurs d'ondes.

**Fig. 1**

**Fig. 2**

**Fig. 3**

**Fig. 3a**

340

341

343

342

**Fig. 4**

350

352

( - )

351

**Fig. 5**

AB₅

AB₆

VIa

AB₅

AB₄

AB₄

AB₃

AB₂

AB₃

AB₁

AB₂

KB

AB₁

**Fig. 6**

**Fig. 6a**

KE$_{16}$

**Fig. 7a**

KE$_8$

**Fig. 7b**

SE$_8$

**Fig. 8**

SE$_8$

**Fig. 8a**

**Fig. 9**

```
┌─────────────────────────────┐
│      Rohe Messdaten:        │
│ Roh-Spektren aller Bildpunkte│
└─────────────────────────────┘
              │
              ▼
┌─────────────────────────────┐
│        Vorkorrektur:        │
│    Dunkelwert-Korrektur     │
│     CCD-Linearisierung      │
└─────────────────────────────┘
              │
              ▼
┌─────────────────────────────┐
│   Vorkorrigierte Messdaten: │
│ Roh-Spektren aller Bildpunkte│
└─────────────────────────────┘
```

| Vorkorrigierte Messdaten Spektralbereich 1 | Vorkorrigierte Messdaten Spektralbereich 16 |
|---|---|
| Geometrie-Korrektur | Geometrie-Korrektur |
| Reflex-Korrektur | Reflex-Korrektur |
| Streulicht-Korrektur | Streulicht-Korrektur |
| Weiss-Normalisierung | Weiss-Normalisierung |
| Rand-Weiss-Normalisierung | Rand-Weiss-Normalisierung |

```
┌─────────────────────────────┐
│ Geometrie/Helligkeitskorrigierte│
│          Messdaten          │
│    (alle Spektralbereiche)  │
└─────────────────────────────┘
              │
              ▼
┌─────────────────────────────┐
│      Spektral-Korrektur     │
└─────────────────────────────┘
              │
              ▼
┌─────────────────────────────┐
│   Vollständig korrigierte   │
│  Messdaten aller Bildpunkte │
│    (alle Spektralbereiche)  │
└─────────────────────────────┘
```

**Fig. 10**